(19) Europäisches Patentamt
European Patent Office
Office européen des brevets

(11) EP 2 375 750 A1

(12) EUROPEAN PATENT APPLICATION

(43) Date of publication:
12.10.2011 Bulletin 2011/41

(51) Int Cl.:
H04N 7/34 (2006.01) H04N 7/26 (2006.01)

(21) Application number: 10003870.2

(22) Date of filing: 12.04.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(71) Applicant: Panasonic Corporation
Kadoma-shi
Osaka 571-8501 (JP)

(72) Inventors:
• Drugeon, Virginie
  63225 Langen (DE)
• Wittmann, Steffen
  63225 Langen (DE)
• Narroschke, Matthias, Dr.
  63225 Langen (DE)

(74) Representative: Grünecker, Kinkeldey,
Stockmair & Schwanhäusser
Anwaltssozietät
Leopoldstrasse 4
80802 München (DE)

(54) **Complexity reduction of edge detection for edge based spatial prediction**

(57) The present invention relates to improving the performance of the spatial prediction by reducing the complexity of edge detection for the sub-pel edge based prediction for encoding and decoding of a current image block. In particular, the coding type and/or the coded values of at least one block adjacent to the current block are evaluated. Based thereon it is decided whether an edge detection based on gradient calculation is performed. According to whether the at least one adjacent block includes an edge or not, a type of spatial prediction and/or prediction direction may be selected at the encoder or at the decoder.

Fig. 6

EP 2 375 750 A1

**Description**

The present invention relates to efficient low complexity selecting of an appropriate type of spatial prediction to be applied during encoding or decoding of an image or video.

BACKGROUND OF THE INVENTION

Spatial interpolation has been employed in many applications. In particular, spatial interpolation forms an essential part of many image and video coding and processing applications. In hybrid image or video coding algorithms, spatial prediction is typically employed for determining a prediction for an image block based on the pixels of already encoded/decoded blocks. On the other hand, spatial interpolation may also be used as a part of post processing the decoded image or video signal, in particular for error concealment.

The majority of standardized video coding algorithms are based on hybrid video coding. Hybrid video coding methods typically combine several different lossless and lossy compression schemes in order to achieve the desired compression gain. Hybrid video coding is also the basis for ITU-T standards (H.26x standards such as H.261, H.263) as well as ISO/IEC standards (MPEG-X standards such as MPEG-1, MPEG-2, and MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG groups.

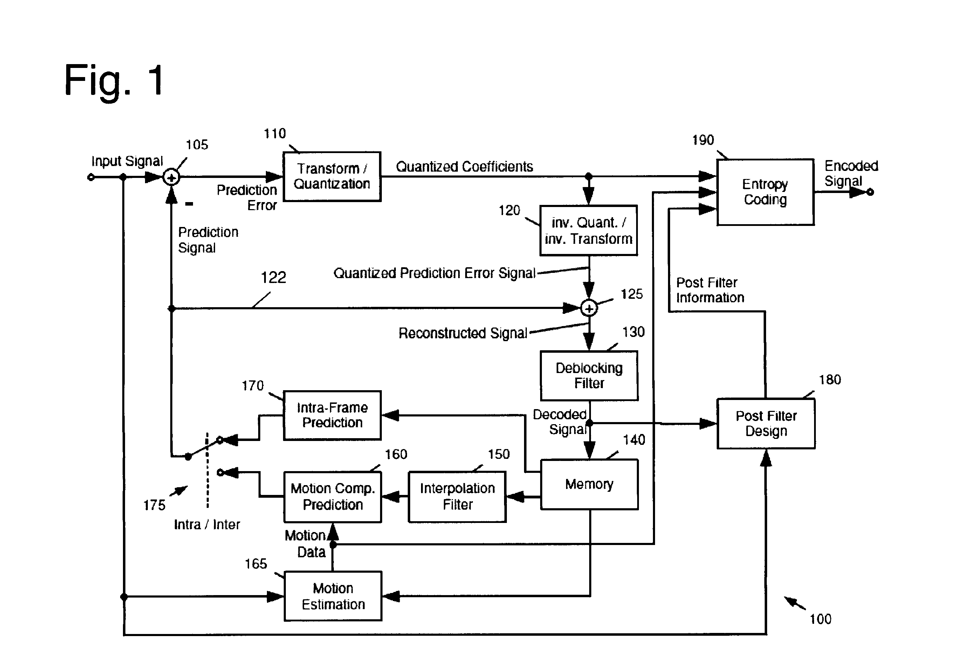

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted subblocks or simply blocks and having the size of, for instance, 8 x 8, 4 x 4, 16 x 8, etc. Figure 1 is an example of a typical H.264/MPEG-4 AVC standard compliant video encoder 100. A subtractor 105 first determines differences between a current block to be encoded of an input video image (input signal) and a corresponding prediction block, which is used for the prediction of the current block to be encoded. In H.264/MPEG-4 AVC, the prediction signal is obtained either by a temporal or by a spatial prediction. The type of prediction can be varied on a per frame basis, per slice basis or on a per macroblock basis.

Macroblocks predicted using temporal prediction are called inter-encoded and macroblocks predicted using spatial prediction are called intra-encoded. The type of prediction for a video frame can be set by the user or selected by the video encoder so as to achieve a possibly high compression gain. In accordance with the selected type of prediction, an intra/inter switch 175 provides corresponding prediction signal to the subtractor 105. The prediction signal using temporal prediction is derived from the previously encoded images, which are stored in a memory 140. The prediction signal using spatial prediction is derived from the values of boundary pixels in the neighboring blocks of the same frame, which have been previously encoded, decoded, and stored in the memory 140. The memory unit 140 thus operates as a delay unit that allows a comparison between current signal values to be encoded and the prediction signal values generated from previous signal values. The memory 140 can store a plurality of previously encoded video frames. The difference between the input signal and the prediction signal, denoted prediction error signal or residual signal, is transformed resulting in coefficients, which are quantized 110. Entropy encoder 190 is then applied to the quantized coefficients in order to further reduce the amount of data in a lossless way. This is mainly achieved by applying a code with code words of variable length wherein the length of a code word is chosen based on the probability of its occurrence.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images. Intra-fame prediction uses a predefined set of intra-prediction modes. Some of the intra-prediction modes predict the current block using the boundary pixels of the neighboring blocks already encoded. Other intra-prediction modes, as template matching for example, use a search area made of already encoded pixels belonging to the same frame to find a best matching prediction block. The predefined set of intra-prediction modes includes some directional spatial intra-prediction modes. The different modes of directional spatial intra-prediction refer to different directions of the applied two-dimensional prediction. This allows efficient spatial intra-prediction in the case of various edge directions. The prediction signal obtained by such an intra-prediction is then subtracted from the input signal by the subtractor 105 as described above. In addition, spatial intra-prediction mode information is entropy encoded and provided together with the encoded video signal.

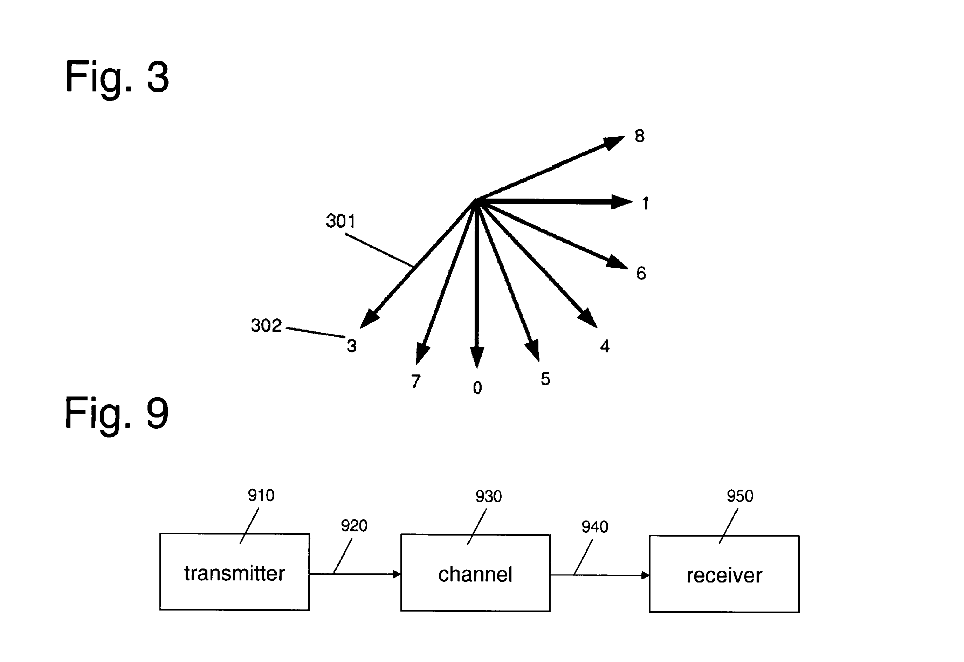

In the H.264/MPEG-4 AVC intra coding scheme, the spatial prediction is performed for subblocks of sizes 4 x 4, 8 x 8 or 16 x 16 pixels in order to reduce spatial redundancy. Intra-fame prediction uses a predefined set of intra-prediction modes, which basically predict the current block using the boundary pixels of the neighboring blocks already coded. The different types of directional spatial prediction refer to different edge directions, i.e. the direction of the applied two-dimensional extrapolation as illustrated in Fig. 3. There are eight different directional prediction modes and one DC prediction mode for subblocks of size 4 x 4 and 8 x 8, and three different directional prediction modes and one DC prediction mode for the macroblocks of 16 x 16 pixels.

Figure 3 schematically illustrates the eight directional prediction modes used for the subblocks of 4 x 4 pixels. Eight of the prediction modes are labeled by a value 302 of range {0,1,3,4,5,6,7,8} and associated with predictions in eight different directions 301. The remaining one prediction mode is labeled by value 2 and called "DC mode". In the DC mode, all pixels in a block are predicted by a single value, which is the mean value of the surrounding reference pixels. In the eight directional modes, the reference pixels are repeated along the corresponding directions 301. For instance, the vertical mode labeled with "0" consists in repeating vertically the reference pixels of the row immediately above the current block. The horizontal mode labeled with "1" consists in repeating horizontally the reference pixels of the column immediately to the left of the current block. The remaining modes labeled with a value from 3 to 8 are diagonal prediction modes, according to which the reference pixels are diagonally repeated in the respective diagonal direction.

Within the video encoder 100, a decoding unit is incorporated for obtaining a decoded video signal. In compliance with the encoding steps, the decoding steps include inverse quantization and inverse transformation 120. The decoded prediction error signal differs from the original prediction error signal due to the quantization error, called also quantization noise. A reconstructed signal is then obtained by adding 125 the decoded prediction error signal to the prediction signal. In order to maintain the compatibility between the encoder side and the decoder side, the prediction signal is obtained based on the encoded and subsequently decoded video signal which is known at both sides the encoder and the decoder. Due to the quantization, quantization noise is superposed to the reconstructed video signal. Due to the block-wise coding, the superposed noise often has blocking characteristics, which result, in particular for strong quantization, in visible block boundaries in the decoded image. In order to reduce these artifacts, a deblocking filter 130 is applied to every reconstructed image block.

In order to be decoded, inter-encoded images require previously encoded and subsequently decoded (reconstructed) image(s). Temporal prediction may be performed uni-directionally, i.e., using only video frames ordered in time before the current frame to be encoded, or bidirectionally, i.e., using also video frames following the current frame. Unidirectional temporal prediction results in inter-encoded images called P frames; bi-directional temporal prediction results in inter-encoded images called B frames. In general, an inter-encoded image may comprise any of P-, B-, or even I-type macroblocks. An inter-encoded macroblock (P- or B- macroblock) is predicted by employing motion compensated prediction 160. First, a best-matching block is found for the current block within the previously encoded and decoded video frames by a motion estimator 165. The best-matching block then becomes a prediction signal and the relative displacement between the current block and its best match is signalized as motion data in the form of three-dimensional (one temporal, two spatial) motion within the bitstream comprising also the encoded video data. In order to optimize the prediction accuracy, motion vectors may be determined with a spatial sub-pixel resolution e.g. half pixel or quarter pixel resolution. This is enabled by an interpolation filter 150.

For both, the intra- and the inter-encoding modes, the differences between the current input signal and the prediction signal are transformed and quantized by the unit 110, resulting in the quantized coefficients. Generally, an orthogonal transformation such as a two-dimensional discrete cosine transformation (DCT) or an integer version thereof is employed since it reduces the correlation of the natural video images efficiently. After the transformation, low frequency components are usually more important for image quality than high frequency components so that more bits can be spent for coding the low frequency components than the high frequency components. In the entropy coder, the two-dimensional matrix of quantized coefficients is converted into a one-dimensional array. Typically, this conversion is performed by a so-called zig-zag scanning, which starts with the DC-coefficient in the upper left corner of the two-dimensional array and scans the two-dimensional array in a predetermined sequence ending with an AC coefficient in the lower right corner. As the energy is typically concentrated in the left upper part of the two-dimensional matrix of coefficients, corresponding to the lower frequencies, the zig-zag scanning results in an array where usually the last values are zero. This allows for efficient encoding using run-length codes as a part of/before the actual entropy coding. H.264/MPEG-4 AVC employs scalar quantization 110, which can be controlled by a quantization parameter (QP) and a customizable quantization matrix (QM). One of 52 quantizers is selected for each macroblock by the quantization parameter. In addition, quantization matrix is specifically designed to keep certain frequencies in the source to avoid losing image quality. Quantization matrix in H.264/MPEG-4 AVC can be adapted to the video sequence and signalized together with the video data.

The H.264/MPEG-4 AVC includes two functional layers, a Video Coding Layer (VCL) and a Network Abstraction Layer (NAL). The VCL provides the encoding functionality as briefly described above. The NAL encapsulates information elements into standardized units called NAL units according to their further application such as transmission over a channel or storing in storage. The information elements are, for instance, the encoded prediction error signal or other information necessary for the decoding of the video signal such as type of prediction, quantization parameter, motion vectors, etc. There are VCL NAL units containing the compressed video data and the related information, as well as non-VCL units encapsulating additional data such as parameter set relating to an entire video sequence, or a Supplemental Enhancement Information (SEI) providing additional information that can be used to improve the decoding performance.

In order to improve the image quality, a so-called post filter 280 may be applied at the decoder side 200. The H.264/MPEG-4 AVC standard enables sending of post filter information for such a post filter via the SEI message. The post filter information is determined at the encoder side by means of a post filter design unit 180, which compares the locally decoded signal and original input signal. In general, the post filter information is an information allowing decoder to set up an appropriate filter. It may include directly the filter coefficients or another information enabling setting up the filter. The filter information, which is output by the post filter design unit 180 is also fed to the entropy coding unit 190 in order to be encoded and inserted into the encoded signal.

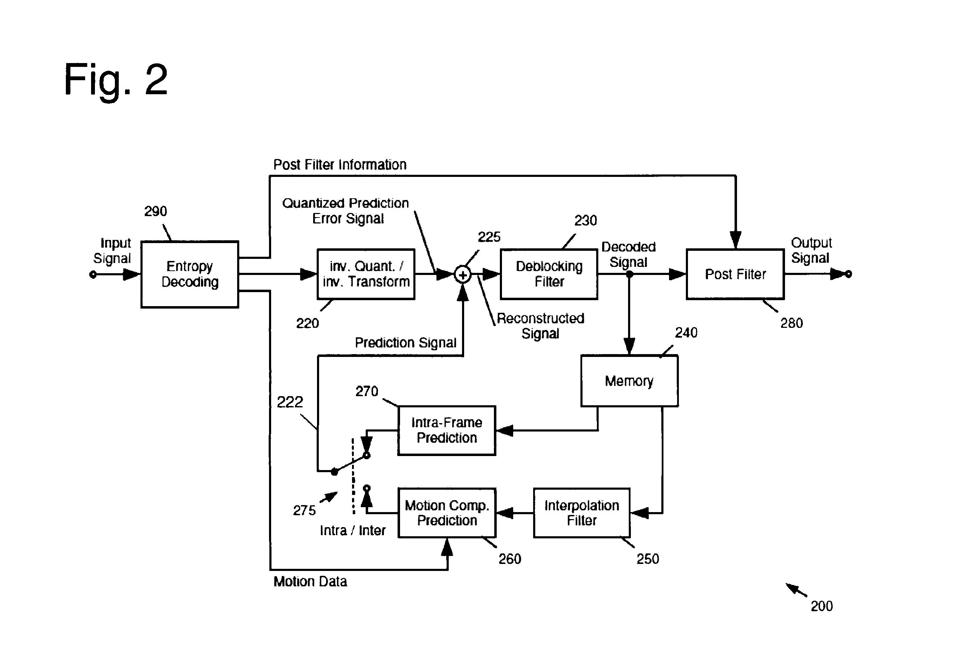

Figure 2 illustrates an example decoder 200 compliant with the H.264/MPEG-4 AVC video coding standard. The encoded video signal (input signal to the decoder) first passes to entropy decoder 290, which decodes the quantized coefficients, the information elements necessary for decoding such as motion data, mode of prediction etc., and the post filter information. The quantized coefficients are inversely scanned in order to obtain a two-dimensional matrix, which is then fed to inverse quantization and inverse transformation 220. After inverse quantization and inverse transformation, a decoded (quantized) prediction error signal is obtained, which corresponds to the differences obtained by subtracting the prediction signal from the signal input to the encoder in the case no quantization noise is introduced.

The prediction signal is obtained from either a temporal or a spatial prediction 260 and 270, respectively, which are switched 275 in accordance with a received information element signalizing the prediction applied at the encoder. The decoded information elements further include the information necessary for the prediction such as prediction type in the case of intra-prediction and motion data in the case of motion compensated prediction. Depending on the current value of the motion vector, interpolation of pixel values may be needed in order to perform the motion compensated prediction. This interpolation is performed by an interpolation filter 250. The quantized prediction error signal in the spatial domain is then added by means of an adder 225 to the prediction signal obtained either from the motion compensated prediction 260 or intra-frame prediction 270. The reconstructed image may be passed through a deblocking filter 230 and the resulting decoded signal is stored in the memory 240 to be applied for temporal or spatial prediction of the following blocks. The post filter information is fed to a post filter 280, which sets up a post filter accordingly. The post filter is then applied to the decoded signal in order to further improve the image quality.

In video coding, intra-coded blocks within both spatially and temporally predicted images serve for refreshing the video sequence and stopping the error propagation. However, the efficiency of the spatial encoding is lower then the performance of the temporal encoding, which leads to a lower overall compression gain as well as to high variations of the resulting bitrate. In order to increase the coding efficiency, EP 2 081 386 A1 provides an improved spatial prediction in which the number of extrapolation directions for predicting pixels of a block is not limited to eight. Rather, edge detection is performed within the already decoded neighboring blocks. Based on a direction of the edge determined as dominant, the pixels of the block are extrapolated or interpolated possibly from a sub-pel position within the line of pixels belonging to a neighboring block.

EP 2 081 386 A1 enables a more precise determination of the prediction direction. This leads to a more precise spatial prediction, which, on the other hand, results in smaller prediction error signal and thus, to a better compression. However, the edge detection and the extrapolation or interpolation in the direction of the detected dominant edge require a plurality of rather complex calculations which increases the complexity and leads to a more complex implementation of the encoding and/or decoding. In a lot of applications it is necessary that at least the decoder has as low complexity as possible. In particular, employment in devices with a limited power supply and/or processing means requires low-complexity implementations of an encoder and/or a decoder.

SUMMARY OF THE INVENTION

The aim of the present invention is to provide a spatial prediction with improved accuracy and/or with reduced complexity.

This is achieved by the subject matter of the independent claims.

Advantageous embodiments of the invention are subject to the dependent claims.

It is the particular approach of the present invention to decide whether an adjacent block to the current block to be predicted contains an edge that may provide an additional prediction direction based on the coding type and/or coding values of the adjacent block if possible, or based on gradient calculation otherwise. According to the decision, the type of spatial prediction of the current block is selected.

In accordance to an aspect of the present invention, a method is provided spatially predicting the values at each pixel position of a block of pixels in an image. The method further comprises the step of deciding whether to calculate a vertical and/or a horizontal gradient for at least one pixel of an adjacent block based on a type of coding and/or coded values of the adjacent block. When it is decided that the vertical and/or horizontal gradient is to be calculated, the vertical and horizontal gradient is calculated for at least one pixel of the adjacent block and based on the result of calculation it is determined whether the adjacent block includes an edge. Based on the result of the edge determination for at least one pixel of at least one adjacent block, a type of the spatial prediction and/or a direction of the spatial prediction is selected to be applied for encoding of the current block and the selected spatial prediction is applied accordingly.

When it is decided that the vertical and/or horizontal gradient is not to be calculated for all the pixels of all the adjacent blocks where edge detection could be performed, preferably, a mode predicting the block with a uniform value is chosen as the type of the spatial prediction mode for the current block.

In accordance to another aspect of the present invention, a method is provided spatially predicting the values at each pixel position of a block of pixels in an image. The method further comprises the step of deciding whether to calculate a vertical and/or a horizontal gradient for at least one pixel of an adjacent block based on a type of coding and/or coded values of the adjacent block. When it is decided that the vertical and/or horizontal gradient is to be calculated, the vertical and horizontal gradient is calculated for at least one pixel of the adjacent block and based on the result of calculation it is determined whether the adjacent block includes an edge. Based on the result of the edge determination, a direction of the spatial prediction is selected to be applied for decoding of the current block and the selected spatial prediction is applied accordingly.

In accordance with still another aspect of the present invention, an apparatus is provided for spatially predicting the values at each pixel position of a block of pixels in an image. The apparatus further comprises a judging unit for deciding whether to calculate a vertical and/or a horizontal gradient for at least one pixel of an adjacent block based on a type of coding and/or coded values of the adjacent block; a gradient calculator for, when it is decided that the vertical and/or horizontal gradient is to be calculated, calculating vertical and horizontal gradient for at least one pixel of the adjacent block. The apparatus further comprises an edge determination unit for determining whether the adjacent block includes an edge based on the result of calculation, and a prediction design unit for selecting, based on the result of the edge determination, a type of the spatial prediction and/or a direction of the spatial prediction to be applied to the current block. The spatial predictor is configured to apply the selected spatial prediction accordingly.

Advantageously, the type of coding includes at least one of: prediction mode indicating whether spatial or temporal prediction has been applied to the adjacent block and/or specifying the particular prediction method, or values of transformation coefficients of the adjacent block transformed in frequency domain; and the coded values of the adjacent block are coefficients obtained by a linear transformation of the adjacent block into frequency domain.

Preferably, decision whether to calculate the vertical and/or horizontal gradient is based on evaluating at least one of the conditions:

- whether the adjacent block has been coded using DC mode. The term DC mode refers to predicting all pixels of a current block with a uniform value.

- whether the adjacent block has been coded by determining a prediction block for the adjacent block using spatial prediction in one of fixed predefined directions, calculating a prediction error block by subtracting the prediction block from the current block, transforming the prediction error block into a block of frequency coefficients, and wherein the values of at least the two lowest AC coefficients are zero. Here the term "two lowest AC coefficients" refers to transformation coefficients immediately below and immediately right from the DC coefficient.

- whether the adjacent block has been coded by determining a prediction block for the adjacent block using temporal prediction or spatial prediction in one of fixed predefined directions, calculating a prediction error block by subtracting the prediction block from the current block, transforming the prediction error block into a block of frequency coefficients, wherein the values of all AC coefficients are zero.

- whether the adjacent block has been coded by a directional spatial prediction, wherein the direction of the directional spatial prediction does not cross the current block. The directional spatial prediction in this case may be the fixed directional spatial prediction along one of fixed predefined directions, or a spatial prediction along an arbitrary edge direction determined by gradient calculation.

The condition posed on AC coefficients above is only an example. The present invention may also work with a more strict condition which requires also predefined AC coefficients other then the two lowest ones, to be zero. Especially for larger sizes of the adjacent block, such stricter conditions may be beneficial. In general, the DC/AC frequency coefficients may be obtained by any transformation into frequency domain, such as DCT, Fourier-based transformation (fast, discrete, integer, etc.), Karhunen-Loeve, or any other.

Preferably, the decision whether to calculate a vertical and/or a horizontal gradient is negative when at least one of the conditions is fulfilled. The above conditions are only examples, and, in general, other conditions based on the coding type and/or coded values such as transformation coefficients may be applied.

Advantageously, the selecting a type and/or a direction of spatial prediction is performed for encoding the current block with the selected type of spatial prediction, the selected spatial prediction being one of prediction by a uniform value for the entire current block, prediction along one of fixed predefined edge directions, or prediction along the direction determined by the gradient calculation.

Furthermore, the step of selecting a direction of the spatial prediction is advantageously performed for decoding the current block, the current block being decoded by using spatial prediction along the selected direction.

The vertical and/or horizontal gradient is preferably calculated for a plurality of pixels in the adjacent block, the pixels being in proximity of the boundary of the adjacent block, the boundary being adjacent to the current block, the calculation being performed by convolution of the plurality of pixels with Sobel mask. In particular, it is not necessary to calculate the gradient for all pixels of the adjacent block. By calculating the gradient only for a subset of pixels in the adjacent block, the complexity is reduced. Moreover, the rows and/or columns directly adjacent to the current block are not suitable for application of a Sobel mask (or other gradient detecting mask) since the mask would only partially overlap the adjacent block. Therefore, preferably, the second and/or third nearest row or column of pixels adjacent to the current clock are used to calculate the gradient. However, the present invention is not limited thereto and other pixels in the adjacent block may be used as well.

In accordance with still another aspect of the present invention, a computer program product is provided comprising a computer-readable medium having a computer-readable program code embodied thereon, wherein the program code is adapted to carry out the above described method.

The above and other objects and features of the present invention will become more apparent from the following description and preferred embodiments given in conjunction with the accompanying drawings, in which:

Figure 1     is a block diagram illustrating an example of a conventional H.264/MPEG-4 AVC video encoder;

Figure 2     is a block diagram illustrating an example of a conventional H.264/MPEG-4 AVC video decoder;

Figure 3     is a schematic drawing illustrating directions along which reference pixels are extrapolated in spatial prediction of H.264/MPEG-4 AVC video coding and decoding;

Figure 4A     is a schematic drawing illustrating a direction of an edge and its coordinates;

Figure 4B     is a schematic drawing illustrating an example spatial extrapolation during which the present invention is applicable;

Figure 4C     is a schematic drawing illustrating another example spatial extrapolation during which the present invention is applicable;

Figure 4D     is a schematic drawing illustrating an example spatial interpolation during which the present invention is applicable;

Figure 5     is an example flow diagram summarizing the steps of extrapolating or interpolation according to the present invention;

Figure 6     is a schematic drawing illustrating an example of deciding whether the calculation of gradients is necessary or not in accordance with the present invention;

Figure 7     is a schematic drawing illustrating three example cases for selecting the type of the spatial interpolation to be applied;

Figure 8     is a flow diagram illustrating an example decision method according to an embodiment of the present invention;

Figure 9     is a block diagram illustrating a system of an encoder and a decoder employing the prediction in accordance with the present invention for intra-prediction;

Figure 10     is a schematic drawing of an overall configuration of a content providing system for implementing content distribution services.;

Figure 11     is a schematic illustration of an overall configuration of a digital broadcasting system;

Figure 12    is a block diagram illustrating an example of a configuration of a television;

Figure 13    is a block diagram illustrating an example of a configuration of an information reproducing/recording unit that reads and writes information from or on a recording medium that is an optical disk;

Figure 14    is a schematic drawing showing an example of a configuration of a recording medium that is an optical disk;

Figure 15A    is a schematic drawing illustrating an example of a cellular phone;

Figure 15B    is a block diagram showing an example of a configuration of the cellular phone;

Figure 16    is a schematic drawing showing a structure of multiplexed data;

Figure 17    is a schematic drawing schematically illustrating how each of the streams is multiplexed in multiplexed data;

Figure 18    is a schematic drawing illustrating how a video stream is stored in a stream of PES packets in more detail;

Figure 19    is a schematic drawing showing a structure of TS packets and source packets in the multiplexed data;

Figure 20    is a schematic drawing showing a data structure of a PMT;

Figure 21    is a schematic drawing showing an internal structure of multiplexed data information;

Figure 22    is a schematic drawing showing an internal structure of stream attribute information;

Figure 23    is a schematic drawing showing steps for identifying video data;

Figure 24    is a block diagram illustrating an example of a configuration of an integrated circuit for implementing the video coding method and the video decoding method according to each of embodiments;

Figure 25    is a schematic drawing showing a configuration for switching between driving frequencies;

Figure 26    is a schematic drawing showing steps for identifying video data and switching between driving frequencies;

Figure 27    is a schematic drawing showing an example of a look-up table in which the standards of video data are associated with the driving frequencies;

Figure 28A    is a schematic drawing showing an example of a configuration for sharing a module of a signal processing unit; and

Figure 28B    is a schematic drawing showing another example of a configuration for sharing a module of a signal processing unit.

DETAILED DESCRIPTION OF THE INVENTION

The problem underlying the present invention is based on the observation that the sub-pel edge detection based prediction requires performing of rather complex calculations for detecting the edges in the adjacent blocks. However, there are cases where no edge is present in the adjacent block and the edge detection calculations are still performed. Moreover, even if an edge is present in the adjacent block, it is possible that the direction of this edge accurately matches one of fixedly predefined directions available for the fixed directional spatial interpolation.

The present invention enables deciding whether the calculation of gradient is necessary for a particular adjacent block or not. Based on this decision, the calculation of gradient is only performed when necessary. In particular, based on certain types of coding and coded values of the adjacent block it may be determined whether an edge is present in the adjacent block or not. Moreover, it may also be determined if an edge is present in the adjacent block that can be accurately predicted by one of predefined fixed directional modes. The directional modes are selectable fixed predefined directions in which the prediction may be performed.

In order to increase the prediction performance of the intra-prediction, an improved intra prediction is employed. In particular, the improved intra-prediction relies on edge detection and calculates an intersection between a block boundary (or a plurality of them) and the edge detected as dominant. The intersection may be on a sub-pel position and the interpolation is performed based on such a sub-pel position. A corresponding example intra-prediction method is disclosed, for instance, in EP 2 081 386 A1. However, the present invention may also be used to improve the efficiency of other directional spatial prediction mechanisms.

In general, edges in an image may be detected by determining a gradient vector field of the image. A gradient vector is larger on an edge and is perpendicular thereto. One of the most popular approaches to detecting the gradient field is convolution of the image with the vertical and horizontal Sobel operator, given by the following masks:

$$S_x = \begin{bmatrix} -1 & 0 & 1 \\ -2 & 0 & 2 \\ -1 & 0 & 1 \end{bmatrix}, \quad S_y = \begin{bmatrix} -1 & -2 & -1 \\ 0 & 0 & 0 \\ 1 & 2 & 1 \end{bmatrix}.$$

In particular, a vertical gradient vector coordinate $Gx$ and a horizontal gradient vector coordinate $Gy$ in a particular pixel $p(x, y)$ are then obtained by filtering the pixel $p(x,$ y) with the vertical Sx and the horizontal Sy Sobel mask, respectively.

Many applications employ Sobel operator for obtaining the gradient field. However, the present invention is not limited to detecting the gradient field by means of the Sobel operator. In general, any edge detection mechanism may be employed that provides the field gradient. For instance, masks with other sizes than Sobel operator may be used such as 2x2 or 4x4, or even larger masks may be used. The selection of the particular mask depends on the desired results. Employing larger masks may add on precision of the edge detection and suppress detection of small local edges, but on the other hand, it increases the computational complexity. Alternatively, masks other than Sobel mask may be used for edge detection, such as Scharr operator, or operators based on higher derivatives.

After obtaining the vertical $Gx$ and the horizontal $Gy$ coordinates of the gradient $G$, for a plurality of pixels of blocks surrounding the block to be predicted, a dominant gradient may be determined. A dominant edge vector $E$ with its horizontal and vertical coordinates $Ex$ and $Ey,$ respectively, is perpendicular on the gradient vector $G$. Correspondingly, the sizes of the horizontal $Ex$ and vertical $Ey$ components of the dominant edge vector E correspond to the sizes of horizontal Gy and vertical Gx gradient, respectively (for instance, $Ex=-Gy, Ey=Gx$ for a counter-clock rotation). Typically, the dominant edge for a current block is determined to be an edge with a maximum norm out of edges that intersect the current block. However, other methods may be used as well, for instance, taking a weighting average of the edges, or the edge direction detected for a majority of pixels, etc. It should be noted that the calculation of gradient is not necessarily performed for the entire adjacent blocks. In general, it is advantageous to select a sub-set of pixels near to the boundaries to the block to be interpolated and calculating the gradient only for these pixels. This approach reduces the number of operations necessary for convolution of the adjacent blocks with the edge detection masks. Moreover, for the prediction, only the edges entering the block to be predicted are of importance, thus edge detection near to the boundaries also reduces the risk of detecting a useless edge.

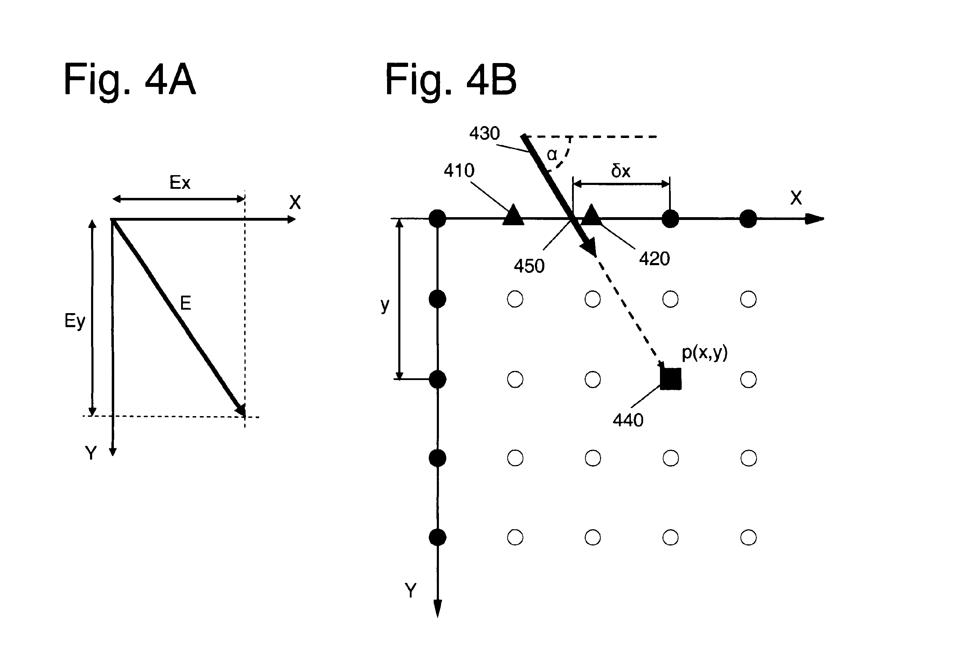

Figure 4A illustrates the edge vector $E$ and its projections $Ex$ and $Ey$ (corresponding to gradients $Gy$ and $Gx$, respectively) into the orthogonal axes $X$ and $Y$. Figure 4B shows raster of a 4x4 pixels of the block to be extrapolated. In particular, white circles and a black square represent pixels of the block to be extrapolated. The black square 440 represents a current pixel $p(x,y)$ the value of which is to be extrapolated in an example below. Orthogonal axis $X$ leads through a bottom row of pixels belonging to a block adjacent to the block to be predicted on its top side. The pixels of the row are illustrated as black triangles or circles. Orthogonal axis $Y$ leads through an utmost right column of pixels belonging to a block adjacent to the block to be predicted on its left side. The pixels of the column are illustrated as black circles. An arrow 430 illustrates the edge detected as a dominant edge $E$ entering the block to be predicted. A dashed arrow illustratively extrapolates the dominant edge up to the current pixel $p(x,y)$. The dominant edge $E$ enters the block to be predicted at a sub-pel position 450 between two full-pel positions 410 and 420 (illustrated as two black triangles) under an angle $\alpha$. The sub-pel position 450 needs to be interpolated based on its distance to the two closest full pels.

In order to preserve the sharpness, position and direction of the edge as far as possible, the current pixel 440 is extrapolated along the edge direction based on the values of both full-pel pixels 410 and 420. In this particular example, the current pixel 440 is predicted as:

$$p(x, y) = w_1 \cdot p(x - \lfloor \delta x \rfloor, 0) + w_2 \cdot p(x - \lceil \delta x \rceil, 0),$$

wherein $w_1$ and $w_2$ are weights, which are preferably determined based on the distance of the full-pel pixels 410 and 420 from the intersection point 450. It is assumed that the point (0,0) lies near to the top left corner of the block to be predicted. For instance, the weights $w_1$ and $w_2$ may be calculated as:

$$w_1 = \lceil \delta x \rceil - \delta x \text{ , and } w_2 = \delta x - \lfloor \delta x \rfloor,$$

wherein $\delta x$ is distance between the $X$ coordinate of the current pixel 440 and the intersection 450. The operator $\lfloor \cdot \rfloor$ denotes the "floor" operation, which returns for a real operand its nearest smaller integer (in this example equal to 1).

The operator $\lceil \cdot \rceil$ denotes the "ceil" operation, which returns for a real operand its nearest greater integer (in this example equal to 2). As can be seen in Figure 4B, the slope $k$ of the edge 430 may be calculated as:

$$k = \tan(\alpha) = \frac{Ey}{Ex} = \frac{y}{\delta x},$$

and thus, the distance $\delta x$ may be calculated as:

$$\delta x = \frac{y \cdot Ex}{Ey}.$$

In general, for each pixel of the block to be predicted, the distance $\delta x$ from the $x$ coordinate of the pixel to be predicted to the intersection point to be interpolated between the edge and the row of pixels of the top neighboring block is computed. Based on the calculated distance $\delta x$ then the current pixel $p(x,y)$ is predicted as $p(x, y)=p(x-\delta x,0)$, which means that the current pixel 440 is extrapolated as value of the interpolated sub-pel position 450.

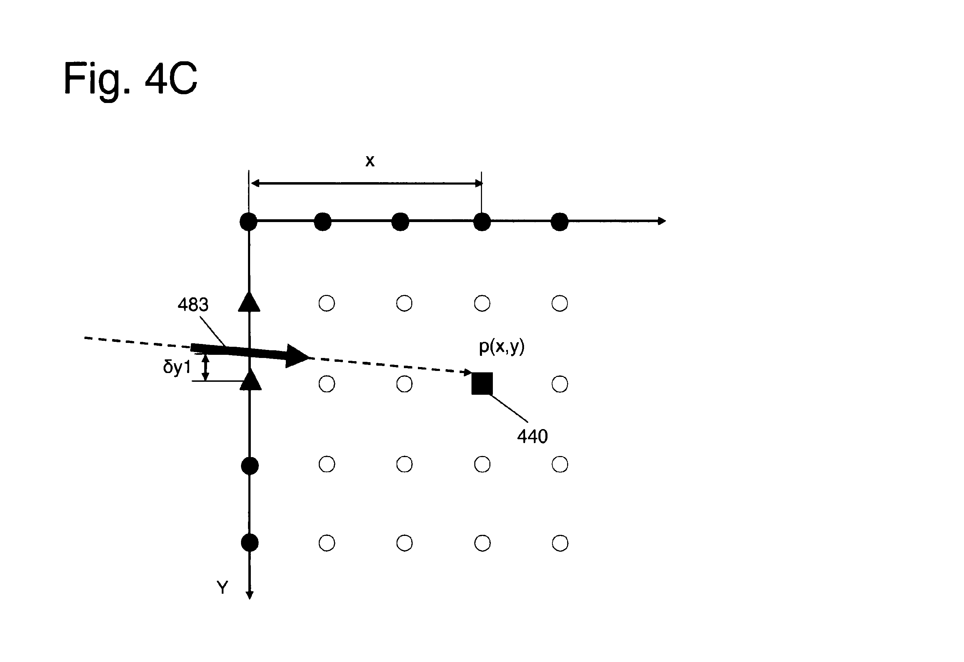

The above example has been described for an edge 430 entering the block to be predicted from the top side. Figure 4C illustrates another example in which an edge 483 enters the block to be predicted from the left side. In this example, the calculation of slope is also based on the determined gradients, however, the $x$ and $y$ coordinates (and correspondingly, the $Ex$ and $Ey$ coordinates) are exchanged. For instance, the slope is calculated as:

$$k_1 = \frac{Ey}{Ex} = \frac{\delta y_1}{x} \text{ , and thus } \delta y_1 = \frac{x \cdot Ey}{Ex}.$$

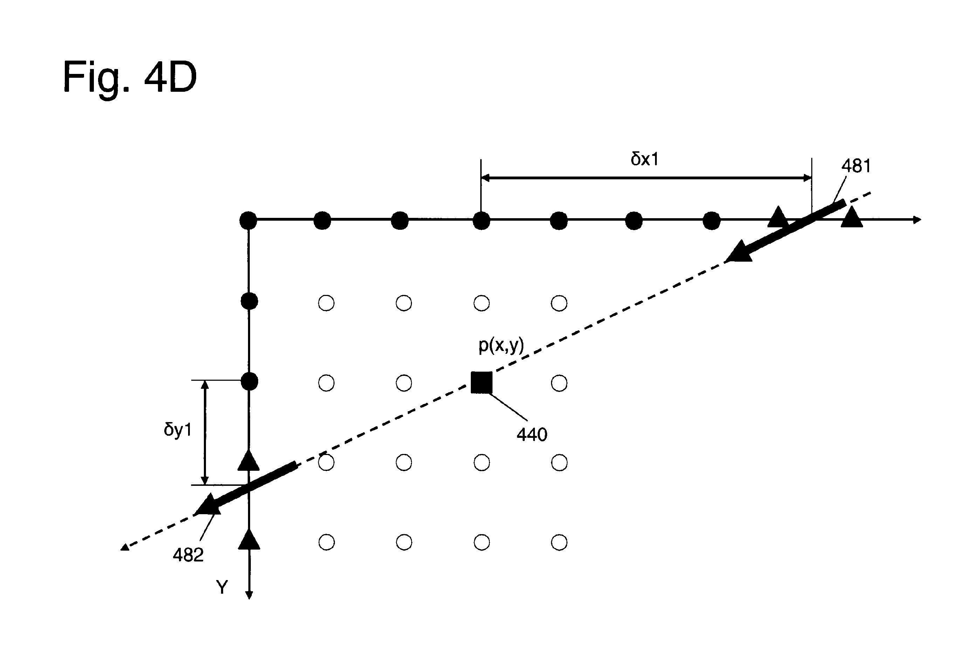

Another example of a possible edge direction is shown in Figure 4D. The edge intersects the left boundary of the block to be predicted. However, unlike the example described with reference to Figure 4C, the edge 482 cutting the left block boundary continues through the block and cuts 481 a bottom boundary of the top right neighboring block. In that case, the prediction is an interpolation of the edge from two directions. If the present invention is applied for intra-prediction in a system with raster scan of blocks for encoding/decoding, the top right neighbor of the block to be predicted is already encoded/decoded and thus, its pixels may also be utilized for the prediction. In the previous examples, the prediction was performed by weighting two pixels in the full-pel positions surrounding the intersection. However, the prediction may also be performed by weighting four pixels: two pixels surrounding the intersection of the left block boundary and two pixels surrounding the intersection of the top right boundary. The weighting factors may further consider the distance of the particular intersection from the pixel to be predicted.

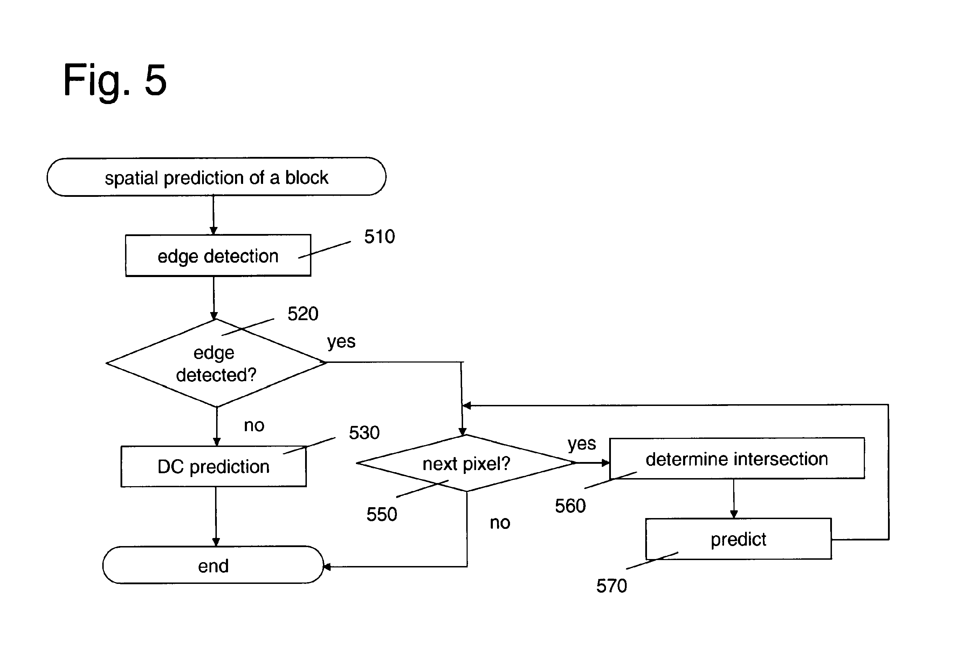

Figure 5 provides an example of the directional spatial prediction of a block of pixels according to the present invention employed in video encoding for intra prediction. An edge detecting step may provide a result of edge detection: a dominant edge along which the extrapolation or interpolation is to be performed. If there is no edge detected ("no" in step 520), meaning that the neighborhood (including one or more adjacent blocks) of the block to be predicted is substantially smooth, a so-called DC interpolation 530 may be applied which sets all pixels of the block to be predicted to the same value given by the average value of the adjacent pixels. If, on the other hand, an edge is detected ("yes" in step 520), for each 550 pixel of the block the intersection of the edge with the block boundaries is determined 560, the intersecting subpel position(s) are interpolated if necessary and the pixel is predicted 570 accordingly.

During encoding of an image, a decision is made for a current block, which kind of coding is to be applied thereto. Spatial prediction may be selected for a block being a part ob en entire image which is coded without temporal prediction, or for a block positioned within a temporally predicted image. I-blocks within P- and/or B- frames may be inserted randomly to refresh the sequence. However, their selection may also be a result of rate-distortion optimization. In the following it is assumed for simplicity that the current block is decided to be coded using spatial prediction. However, the following approach may also be a part ob the rate-distortion optimization for supporting the decision about the coding mode of the current block.

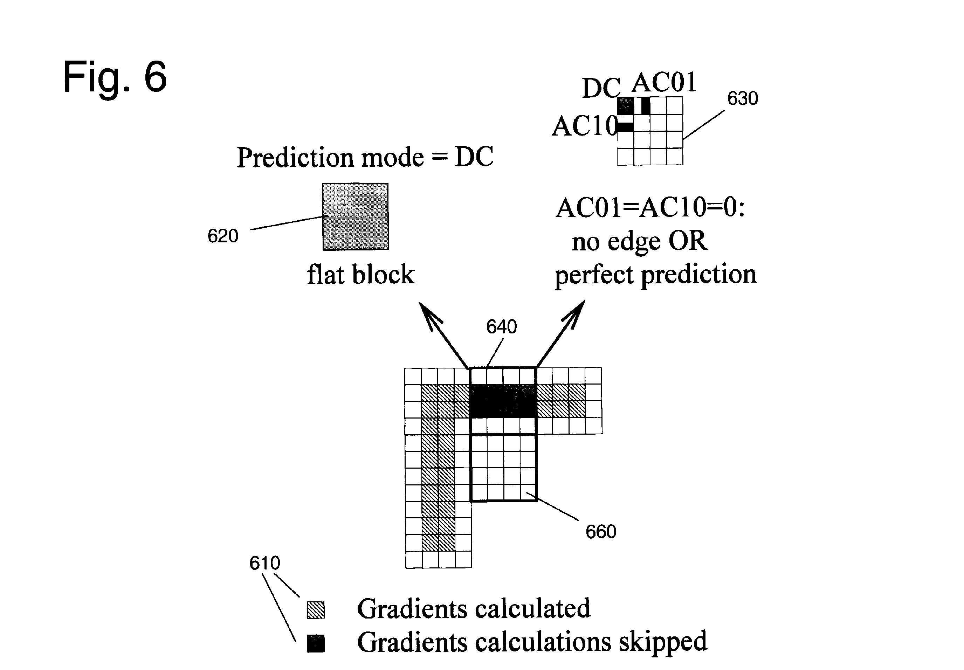

For the current block three types of spatial interpolation may be selected: fixed directions prediction as described in the background section, DC mode in which the current block is predicted by a uniform value, or the sub-pel edge detection based directional prediction described above. In order to select for the current block the appropriate spatial prediction, a rate distortion optimization approach can be used to determine the cost of encoding the current block with an intra prediction mode using one of the fixed predefined directions or one of DC prediction or sub-pel edge based prediction. To determine, for one given block, if the DC prediction or the sub-pel edge based prediction is more appropriate, it is necessary to determine the edges entering the current block in order to judge whether an interpolation along such edges would define a valuable additional directional prediction mode. In order to detect edges, typically the above described gradient field calculation is applied to the pixels of the blocks adjacent to the current block. In order to reduce the complexity, the gradient may be calculated only for a subset of pixels in the neighboring blocks. Preferably, pixels near to the boundaries to the current block are used as shown in Figure 6 by reference numeral 610 pointing to hatched and gray pixels within the neighboring blocks. If the gradient is calculated only for a two-pixel wide rows in the top and top-right neighbors, for two-pixel wide columns in the left and left bottom neighbors, and for the two-pixel wide corner of the top left neighbor, this still makes 2*6+2*2*4+8 = 36 pixel positions for which the gradient is calculated for a 4x4 pixel large current block. This becomes even more for larger blocks. For instance, in case of a 8x8 pixel large current block, the gradient is calculated for 2*2*7+2*8+8 = 52 pixel positions, and in case of 16x16 pixel large current block, the gradient is calculated for 2*2*15+8 = 68 pixel positions. This increases the number of operations necessary, which leads to higher requirements on computational time and computational resources. On the other hand, further reduction of pixel positions for which the gradient is calculated may lead to unreliable and/or inaccurate edge detection and thus, to suboptimal decisions regarding the decision to use DC prediction or sub-pel edge-based prediction and/or to inefficient prediction due to an inaccurate edge direction.

However, there are cases in which the presence and/or the orientation of the edge may be determined without explicitly calculating the gradient field. Therefore, according to the present invention, the gradient calculations are skipped in cases where the prediction mode of the adjacent block and/or the information obtained from the encoded adjacent block may provide hints toward the presence and/or direction of edges. At the time where the decision about the type of spatial prediction for the current block is made at the encoder, the adjacent blocks are already encoded and thus, the information about their coding type as well as the coded values are available. Especially if the adjacent block is encoded spatially, the results of coding may provide indications in respect of its edges.

In particular, the gradient calculations are skipped for pixels belonging to a block encoded with the DC prediction mode. If the block is encoded in the DC prediction mode, it is likely that such a block is essentially smooth. Therefore, it is assumed that there is no edge and thus, no gradient calculations are necessary. This is indicated in Figure 6 by the adjacent block 640 having a form of a uniform block 620. Block 660 is the current block.

If the prediction mode of the adjacent block is a fixed directional prediction, one of the fixed direction selected for the prediction of the adjacent block may be accurate or not. If the fixed direction accurately predicts the edge in the adjacent block 640, then the prediction residuals are low. Thus, alternatively, or in addition, in accordance with the preset invention, the gradient calculations are skipped for a block that has the low frequency AC coefficients with zero value. In particular, if DCT coefficients AC01 and AC10 are zero as shown in the transformed block 630 as black-white coefficients, then the gradient calculations are skipped as well.

If the prediction mode of the adjacent block is the fixed directional prediction or the sub-pel edge based prediction, the gradient calculations are skipped if the edge along which the adjacent block is predicted does not cross the current block 660. If the edge does not cut the current block, it cannot be used for its prediction and therefore, calculating the gradients becomes obsolete. If one of the surrounding blocks was predicted with a prediction direction that does not cross any pixel of the block to be predicted (for example horizontal direction for the top neighbor), the gradients are not calculated for the pixels of that block.

Furthermore, if one of the surrounding blocks has only zero transformation coefficients (for instance, DCT coefficients or KLT coefficients), the gradients are not calculated for the pixels of that block, except for the case the adjacent block is predicted with the sub-pel edge prediction mode. In particular, in case of the DC transformation, the gradient calculation is also skipped if all AC coefficients are zero, regardless to the value of DC. If all AC DCT coefficients are all zero, the block is substantially smooth, meaning that no edge is present. If all transformation coefficients of KLT transformed block are zero, the block is substantially smooth, meaning that no edge is present. Similar condition may be applied for any other frequency domain transformation.

Generally, the gradients should be calculated for the pixels of the blocks predicted with the edge prediction mode or one of the template matching modes.

The present invention provides the advantage of complexity reduction by performing edge detection only if necessary at both encoder and decoder. The above criteria are very simple and based on already encoded (at the encoder) and decoded (at the decoder) information. Gradients are not calculated at pixel positions where there is no edge or where the standard prediction modes are efficient to predict the edge. In that case, the edge direction is not needed. The present invention prevents unnecessary loss in coding efficiency which could be caused by the sub-pel based edge based prediction performed for each neighbouring block.

The possibilities listed previously are examples only. Generally, every possibility using the coding information of the surrounding blocks (prediction mode, levels of the non-zero coefficients) can be used to determine if the block is likely to contain an interesting edge for the edge prediction mode of the block to be predicted.

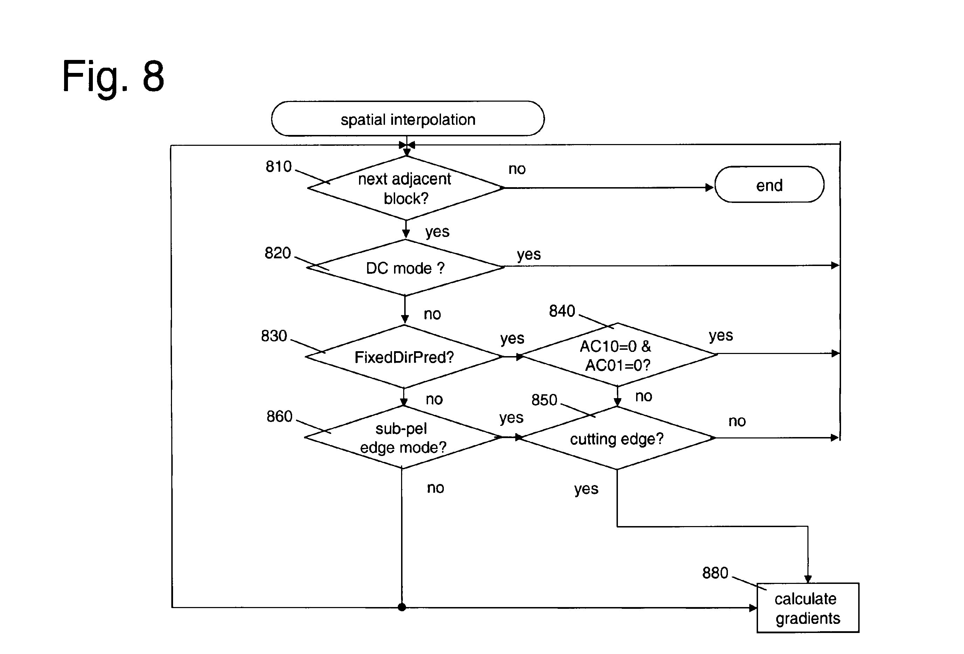

Figure 8 illustrates an example of a method for deciding whether the gradient calculation is to be performed or not for the adjacent blocks to the current image. First, an adjacent block is chosen 810. If there is no or no other adjacent block, the method terminates. Otherwise, if the prediction mode of the chosen adjacent block is DC mode ("yes" in step 820), then the gradient calculation for this adjacent block is skipped. It is assumed that there is no edge in the adjacent block. The method continues with evaluating the next adjacent block (if available). If the prediction mode of the adjacent block is not DC mode ("no" in step 820), it is tested 830 whether the prediction mode is a fixed directional prediction, which predicts along one of predefined fixed directions. If the mode of the adjacent block is the fixed directional interpolation ("yes" in step 830), then it is further tested 840 whether the low frequency transformation coefficients are zero. In this example, the lowest AC coefficients AC01 and AC10 located just below and beside the DC coefficient, respectively, are tested. However, in general, the condition may also be set up more strictly, which means for more low-frequency coefficients. The condition may be even designed to include all zero AC coefficients. If the condition on AC coefficients is fulfilled ("yes" in step 840), the gradient calculation is skipped for the adjacent block and another adjacent block is tested, if available. If the condition on AC coefficients is not fulfilled ("no" in step 840), then it is tested 850 whether the edge along which the adjacent block was predicted enters the current block or not. If it enters the current block ("yes" in step 850), the gradients are calculated since it is assumed that sub-pel edge based prediction may improve the prediction quality because there is an edge and the prediction using this edge was not perfect for the adjacent block. If the edge does not enter the current block ("no" in step 850), then the gradient calculation is skipped for the adjacent block and another adjacent block is tested, if available. The condition on cutting edge (edge entering the current block) may also be evaluated 860 for the adjacent block if its prediction mode was sub-pel edge based prediction. It should be noted that Figure 8 is only an example and the present invention is not limited to the shown set of conditions. A subset of these conditions may be applied, or, additional conditions may be added. In general, the motivation is to disable gradient calculations for the pixels belonging to the blocks that probably do not contain any edge or that contain useless edges, meaning the edges that can be accurately predicted with the other modes.

After performing the decision for each of the available (already encoded/decoded) adjacent blocks whether or not to calculate the gradients, the gradients are calculated for the adjacent blocks, for which they are necessary as shown in step 880. Having the information about edges for each adjacent block, the prediction mode for the current block may be decided.

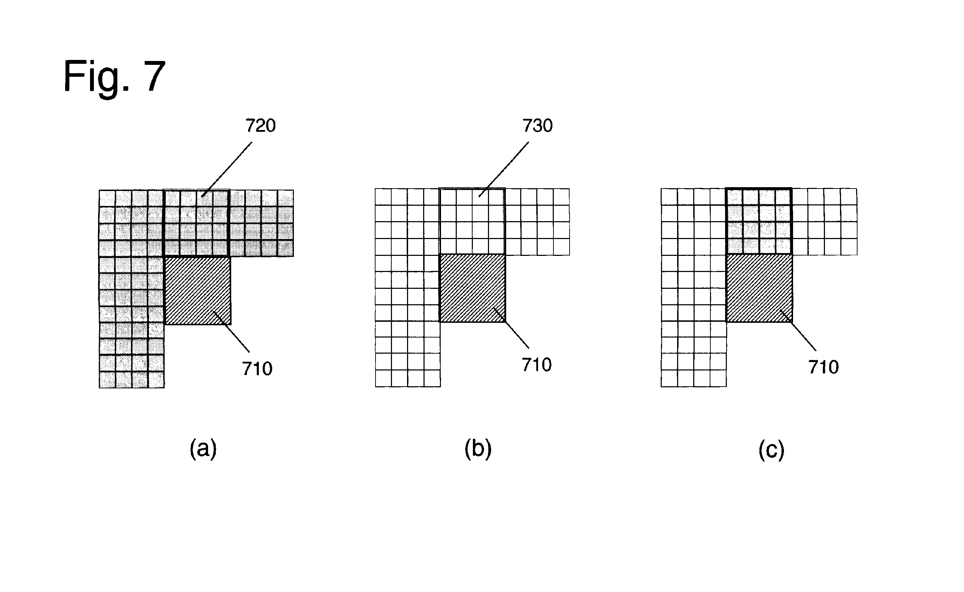

Figure 7 illustrates some simple cases for selecting an appropriate spatial prediction mode for the current block. In particular, part (a) of Figure 7 shows a current block 710. All available neighbors of the current block 710 have been detected to potentially contain an edge and for all of these adjacent blocks the gradients were calculated, which is indicated by the gray color of the adjacent blocks 720. In such a case, for the current block, sub-pel edge detection based prediction is advantageously selected based on the strongest edge out of the adjacent blocks' edges. It should be noted that, in general, after calculating the gradients, it may still come out that there is no substantial edge in an adjacent block, or that the edges do not cross the current block, or that the strongest edge's direction is the same as one of the fixed predefined directions (vertical for example). In such a case, the DC prediction mode is selected.

Part (b) of Figure 7 shows a current block 710 surrounded by available blocks for which the gradient calculations have been skipped. This is illustrates by white color 730 of the adjacent blocks. In this case, the DC prediction mode is selected.

Part (c) of Figure 7 illustrates an example in which the gradients were only calculated for one block (top neighboring block) and skipped for the rest. In such a case, according to the results of the edge detection in that block, an edge is selected as a dominant edge along which the current block can be predicted. As a dominant edge, an edge with the largest magnitude of the gradient may be selected. However, if no edge is detected for the gray block or the edges do not cross the current block, or the strongest edge's direction is equal to one of the fixed predefined directions, the DC mode may be selected.

Summarizing, the gradient calculation provides a basis for detecting whether an edge is present in the block or not and for determining the direction and magnitude of the edge. The selection of the spatial prediction mode for the current block (fixed directional prediction or one of DC prediction or sub-pel edge based prediction) is then performed based on rate distortion decision. The decision between DC prediction or sub-pel edge based prediction is performed based on the information for each of the adjacent blocks. In general, the spatial prediction mode may be selected by evaluating all available adjacent blocks. Alternatively, only a subset of these blocks may be taken. for instance, only the left and the top neighbouring blocks may be employed.

The present invention is applicable to both encoder and decoder. Other than encoder, the decoder cannot decide automatically the prediction mode for the current block. The prediction mode of the current block is typically signalized within the bitstream including the coded image/video data. The calculating of the gradients is only necessary in case the prediction mode for the current block is the sub-pel edge based prediction or the DC prediction. However, also in this case, the gradient calculation for some of the adjacent blocks may be avoided similarly as described above for the encoder, for example as with reference to Figure 8.

For simplicity, all the above examples have been described for a block of 4x4 pixels. However, the present invention is not limited to such blocks. In general, any other square and rectangular sizes of blocks such as 8x8, 16x16, 8x16, 4x8, etc. may be predicted as described above.

Moreover, the above examples have been described mainly for deployment in image or video encoders and decoders. However, the present invention may readily be applied for other image processing tasks in which spatial extrapolation or interpolation based on egde detection is required if the coding type and the coded values of adjacent blocks are available. For instance, the extrapolation/interpolation based on edge detection according to the present invention may be used for post-processing such as error concealment.

Looking at the Figure 1 and 2, the predictor (predicting apparatus) of the present invention may be employed within the intra-frame prediction unit 170 at the encoder 100 and within the intra-frame prediction unit 270 at the decoder 200. In particular, the intra-prediction unit 170 or 270 may further comprise an edge detector, an intersection determining unit, an interpolating unit of the subpel positions in neighboring blocks and an extrapolating/interpolating unit. The edge detector detects a dominant edge cutting the block to be predicted. The intersection determining unit determines the sub-pel position corresponding to intersection of the edge determined by the edge detector and the row or column of pixels belonging to neighboring blocks surrounding the block to be predicted. The interpolating unit interpolates the value of the sub-pel position calculated by the intersection determining unit based on the values of the closest full-pel. The extrapolating/interpolating unit extrapolates/interpolates the value of the current pixel based on the subpel position(s) calculated by the intersection determining unit. The intra-frame prediction unit 170 at the encoder 100 and the intra-frame prediction unit 270 at the decoder 200 would also implement the decision whether the above gradient calculation is necessary for each of the adjacent blocks and determination of edge presence based on the coding type or coded values or based on calculated gradients.

In the above examples it has been assumed that an image is encoded and/or decoded in a raster scan of blocks. This assumption causes that the adjacent blocks available for prediction are always the blocks on the top of the block to be predicted and a block left from the block to be predicted. However, the present invention will also work for different scans as long as there is at least one block already encoded/decoded adjacent to the block to be predicted and as long as there is an edge cutting the block to be predicted and passing the adjacent block.

The above examples were described for a single block of pixels. Indeed, an image subdivided into a plurality of blocks may be encoded using different encoding methods for each of the blocks. Error concealment may also be applied to single blocks. However, the present invention may also be applied to encode an entire image or frame of a video sequence.

Figure 9 illustrates an example system for transferring encoded video data from an encoder side to a decoder side in accordance with the present invention. An input video signal is encoded by an encoder 901 and provided to a channel 902. The encoder 901 is an encoder implementing the directional spatial prediction in accordance with any of the embodiments of the present invention for intra prediction of at least one block as described above. The channel 902 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system. Apart from the encoder, the encoder side may also include preprocessing of the input video signal such as format conversion and/or transmitter for transmitting the encoded video signal over the channel 902 or an application for transferring the encoded video signal into the storage. The encoded video signal is then obtained from the channel 902 by a decoder 903. The decoder 903 is a decoder implementing the directional spatial prediction in accordance with any embodiment of the present invention as described above. The decoder decodes the encoded video signal. Apart from the decoder, the decoder side may further include a receiver for receiving the encoded video signal from a transmission channel, or an application for extracting the encoded video data from the storage, and/or post-processing means for post processing of the decoded video signal, such as format conversion.

The processing described in each of embodiments can be simply implemented in an independent computer system, by recording, in a recording medium, a program for implementing the configurations of the video coding method and the video decoding method described in each of embodiments. The recording media may be any recording media as long as the program can be recorded, such as a magnetic disk, an optical disk, a magnetic optical disk, an IC card, and a semiconductor memory.

Hereinafter, the applications to the video coding method and the video decoding method described in each of embodiments and systems using thereof will be described.

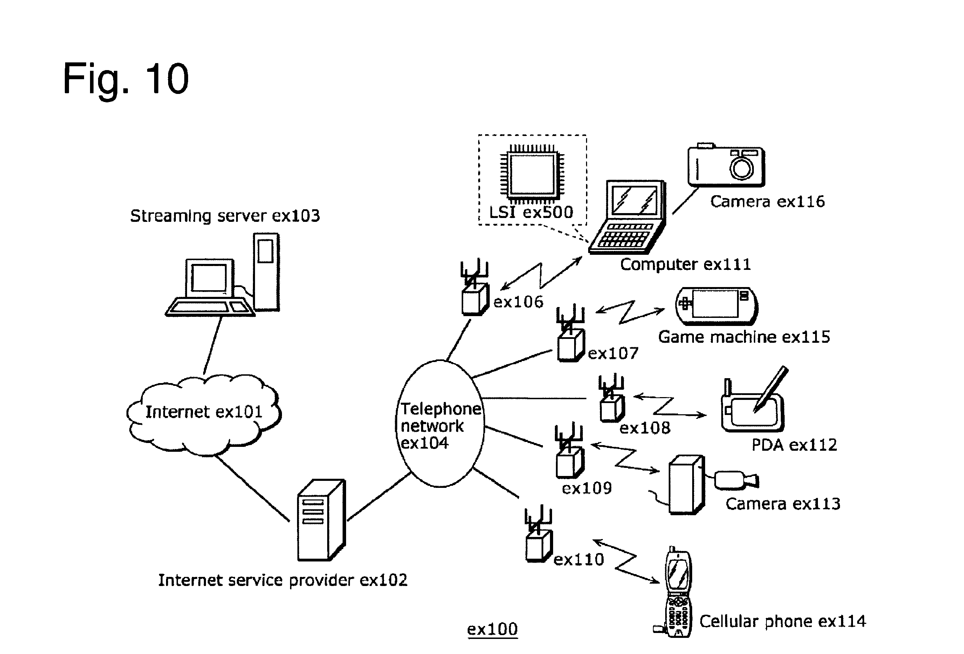

Figure 10 illustrates an overall configuration of a content providing system ex100 for implementing content distribution services. The area for providing communication services is divided into cells of desired size, and base stations ex106, ex107, ex108, ex109, and ex110 which are fixed wireless stations are placed in each of the cells. The content providing system ex100 is connected to devices, such as a computer ex111, a personal digital assistant (PDA) ex112, a camera ex113, a cellular phone ex114 and a game machine ex115, via the Internet ex101, an Internet service provider ex102, a telephone network ex104, as well as the base stations ex106 to ex110, respectively.

However, the configuration of the content providing system ex100 is not limited to the configuration shown in Figure 10, and a combination in which any of the elements are connected is acceptable. In addition, each device may be directly connected to the telephone network ex104, rather than via the base stations ex106 to ex110 which are the fixed wireless stations. Furthermore, the devices may be interconnected to each other via a short distance wireless communication and others.

The camera ex113, such as a digital video camera, is capable of capturing video. A camera ex116, such as a digital video camera, is capable of capturing both still images and video. Furthermore, the cellular phone ex114 may be the one that meets any of the standards such as Global System for Mobile Communications (GSM), Code Division Multiple Access (CDMA), Wideband-Code Division Multiple Access (W-CDMA), Long Term Evolution (LTE), and High Speed Packet Access (HSPA). Alternatively, the cellular phone ex114 may be a Personal Handyphone System (PHS).

In the content providing system ex100, a streaming server ex103 is connected to the camera ex113 and others via the telephone network ex104 and the base station ex109, which enables distribution of images of a live show and others. In such a distribution, a content (for example, video of a music live show) captured by the user using the camera ex113 is coded as described above in each of embodiments, and the coded content is transmitted to the streaming server ex103. On the other hand, the streaming server ex103 carries out stream distribution of the transmitted content data to the clients upon their requests. The clients include the computer ex111, the PDA ex112, the camera ex113, the cellular phone ex114, and the game machine ex115 that are capable of decoding the above-mentioned coded data. Each of the devices that have received the distributed data decodes and reproduces the coded data.

The captured data may be coded by the camera ex113 or the streaming server ex103 that transmits the data, or the coding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and video captured by not only the camera ex113 but also the camera ex116 may be transmitted to the streaming server ex103 through the computer ex111. The coding processes may be performed by the camera ex116, the computer ex111, or the streaming server ex103, or shared among them.

Furthermore, the coding and decoding processes may be performed by an LSI ex500 generally included in each of the computer ex111 and the devices. The LSI ex500 may be configured of a single chip or a plurality of chips. Software for coding and decoding video may be integrated into some type of a recording medium (such as a CD-ROM, a flexible disk, and a hard disk) that is readable by the computer ex111 and others, and the coding and decoding processes may be performed using the software. Furthermore, when the cellular phone ex114 is equipped with a camera, the image data obtained by the camera may be transmitted. The video data is data coded by the LSI ex500 included in the cellular phone ex114.

Furthermore, the streaming server ex103 may be composed of servers and computers, and may decentralize data and process the decentralized data, record, or distribute data.

As described above, the clients may receive and reproduce the coded data in the content providing system ex100. In other words, the clients can receive and decode information transmitted by the user, and reproduce the decoded data in real time in the content providing system ex100, so that the user who does not have any particular right and equipment can implement personal broadcasting.

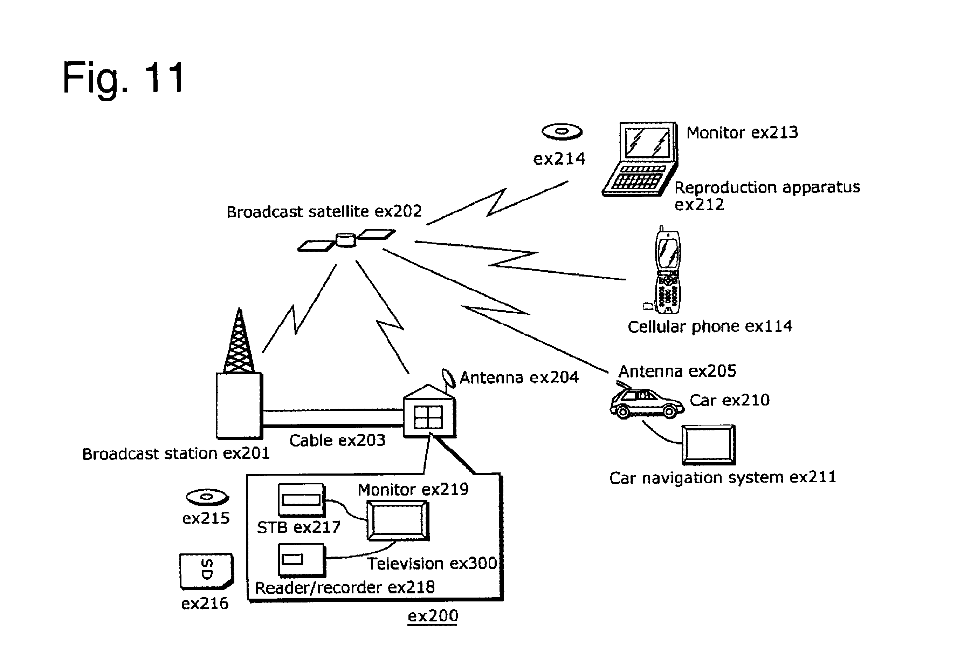

Aside from the example of the content providing system ex100, at least one of the video coding apparatus and the video decoding apparatus described in each of embodiments may be implemented in a digital broadcasting system ex200 illustrated in Figure 11. More specifically, a broadcast station ex201 communicates or transmits, via radio waves to a broadcast satellite ex202, multiplexed data obtained by multiplexing audio data and others onto video data. The video data is data coded by the video coding method described in each of embodiments. Upon receipt of the multiplexed data, the broadcast satellite ex202 transmits radio waves for broadcasting. Then, a home-use antenna ex204 with a satellite broadcast reception function receives the radio waves.

Next, a device such as a television (receiver) ex300 and a set top box (STB) ex217 decodes the received multiplexed data, and reproduces the decoded data.

Furthermore, a reader/recorder ex218 (i) reads and decodes the multiplexed data recorded on a recording media ex215, such as a DVD and a BD, or (i) codes video signals in the recording medium ex215, and in some cases, writes data obtained by multiplexing an audio signal on the coded data. The reader/recorder ex218 can include the video decoding apparatus or the video coding apparatus as shown in each of embodiments. In this case, the reproduced video signals are displayed on the monitor ex219, and can be reproduced by another device or system using the recording medium ex215 on which the multiplexed data is recorded. It is also possible to implement the video decoding apparatus in the set top box ex217 connected to the cable ex203 for a cable television or to the antenna ex204 for satellite and/or terrestrial broadcasting, so as to display the video signals on the monitor ex219 of the television ex300. The video decoding apparatus may be implemented not in the set top box but in the television ex300.

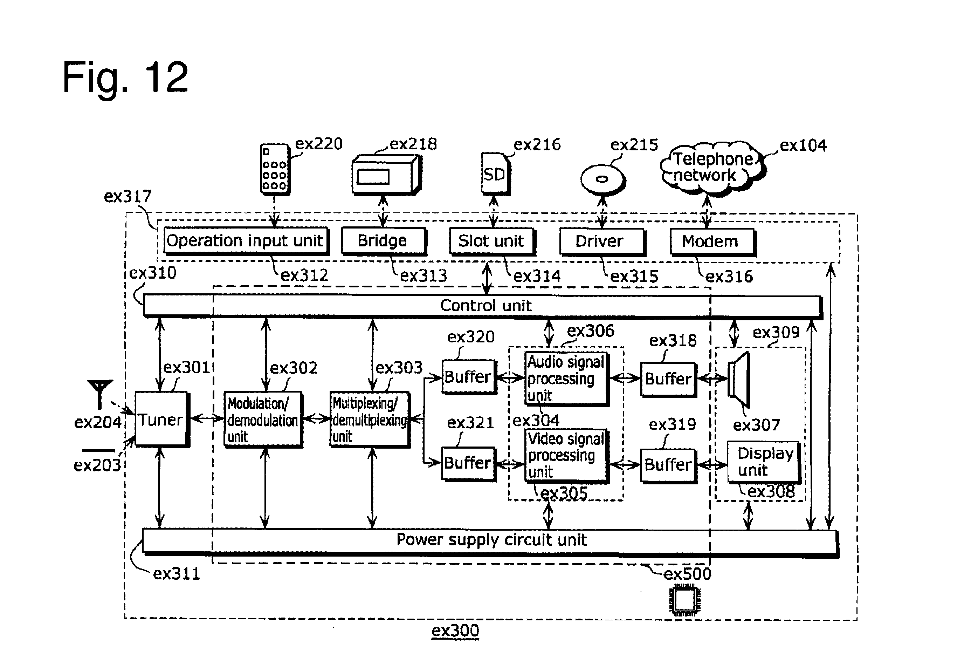

Figure 12 illustrates the television (receiver) ex300 that uses the video coding method and the video decoding method described in each of embodiments. The television ex300 includes: a tuner ex301 that obtains or provides multiplexed data obtained by multiplexing audio data onto video data, through the antenna ex204 or the cable ex203, etc. that receives a broadcast; a modulation/demodulation unit ex302 that demodulates the received multiplexed data or modulates data into multiplexed data to be supplied outside; and a multiplexing/demultiplexing unit ex303 that demultiplexes the modulated multiplexed data into video data and audio data, or multiplexes video data and audio data coded by a signal processing unit ex306 into data.

The television ex300 further includes: a signal processing unit ex306 including an audio signal processing unit ex304 and a video signal processing unit ex305 that decode audio data and video data and code audio data and video data, respectively; and an output unit ex309 including a speaker ex307 that provides the decoded audio signal, and a display unit ex308 that displays the decoded video signal, such as a display. Furthermore, the television ex300 includes an interface unit ex317 including an operation input unit ex312 that receives an input of a user operation. Furthermore, the television ex300 includes a control unit ex310 that controls overall each constituent element of the television ex300, and a power supply circuit unit ex311 that supplies power to each of the elements. Other than the operation input unit ex312, the interface unit ex317 may include: a bridge ex313 that is connected to an external device, such as the reader/recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory element for storage. The constituent elements of the television ex300 are connected to each other through a synchronous bus.

First, the configuration in which the television ex300 decodes multiplexed data obtained from outside through the antenna ex204 and others and reproduces the decoded data will be described. In the television ex300, upon a user operation through a remote controller ex220 and others, the multiplexing/demultiplexing unit ex303 demultiplexes the multiplexed data demodulated by the modulation/demodulation unit ex302, under control of the control unit ex310 including a CPU. Furthermore, the audio signal processing unit ex304 decodes the demultiplexed audio data, and the video signal processing unit ex305 decodes the demultiplexed video data, using the decoding method described in each of embodiments, in the television ex300. The output unit ex309 provides the decoded video signal and audio signal outside, respectively. When the output unit ex309 provides the video signal and the audio signal, the signals may be temporarily stored in buffers ex318 and ex319, and others so that the signals are reproduced in synchronization with each other. Furthermore, the television ex300 may read multiplexed data not through a broadcast and others but from the recording media ex215 and ex216, such as a magnetic disk, an optical disk, and a SD card. Next, a configuration in which the television ex300 codes an audio signal and a video signal, and transmits the data outside or writes the data on a recording medium will be described. In the television ex300, upon a user operation through the remote controller ex220 and others, the audio signal processing unit ex304 codes an audio signal, and the video signal processing unit ex305 codes a video signal, under control of the control unit ex310 using the coding method described in each of embodiments. The multiplexing/demultiplexing unit ex303 multiplexes the coded video signal and audio signal, and provides the resulting signal outside. When the multiplexing/demultiplexing unit ex303 multiplexes the video signal and the audio signal, the signals may be temporarily stored in the buffers ex320 and ex321, and others so that the signals are reproduced in synchronization with each other. Here, the buffers ex318, ex319, ex320, and ex321 may be plural as illustrated, or at least one buffer may be shared in the television ex300. Furthermore, data may be stored in a buffer so that the system overflow and underflow may be avoided between the modulation/demodulation unit ex302 and the multiplexing/demultiplexing unit ex303, for example.

Furthermore, the television ex300 may include a configuration for receiving an AV input from a microphone or a camera other than the configuration for obtaining audio and video data from a broadcast or a recording medium, and may code the obtained data. Although the television ex300 can code, multiplex, and provide outside data in the description, it may be capable of only receiving, decoding, and providing outside data but not the coding, multiplexing, and providing outside data.

Furthermore, when the reader/recorder ex218 reads or writes multiplexed data from or on a recording medium, one of the television ex300 and the reader/recorder ex218 may decode or code the multiplexed data, and the television ex300 and the reader/recorder ex218 may share the decoding or coding.

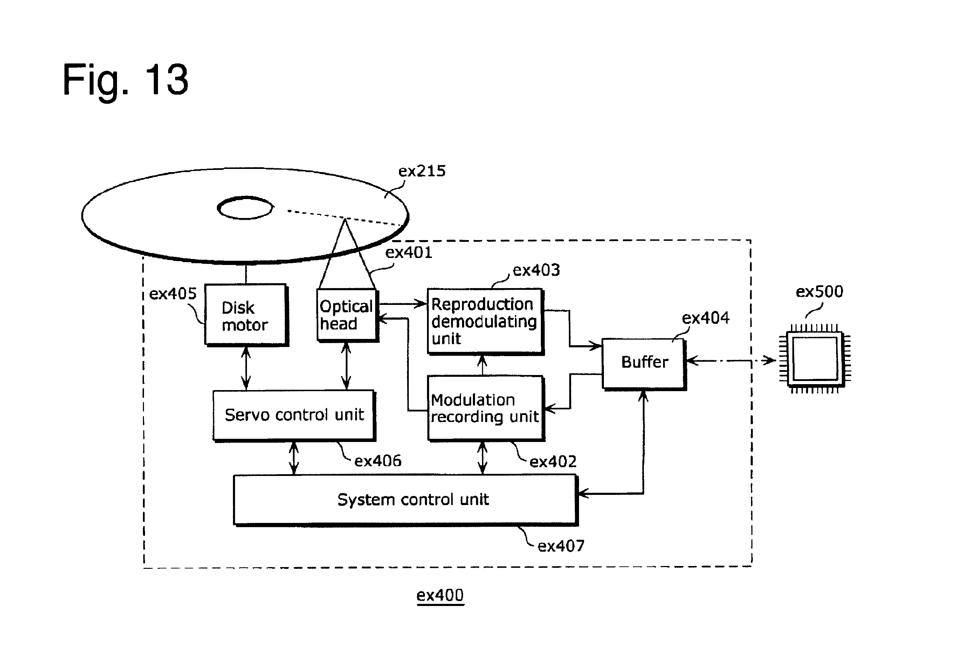

As an example, Figure 13 illustrates a configuration of an information reproducing/recording unit ex400 when data is read or written from or on an optical disk. The information reproducing/recording unit ex400 includes constituent elements ex401, ex402, ex403, ex404, ex405, ex406, and ex407 to be described hereinafter. The optical head ex401 irradiates a laser spot in a recording surface of the recording medium ex215 that is an optical disk to write information, and detects reflected light from the recording surface of the recording medium ex215 to read the information. The modulation recording unit ex402 electrically drives a semiconductor laser included in the optical head ex401, and modulates the laser light according to recorded data. The reproduction demodulating unit ex403 amplifies a reproduction signal obtained by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215. The disk motor ex405 rotates the recording medium ex215. The servo control unit ex406 moves the optical head ex401 to a predetermined information track while controlling the rotation drive of the disk motor ex405 so as to follow the laser spot. The system control unit ex407 controls overall the information reproducing/recording unit ex400. The reading and writing processes can be implemented by the system control unit ex407 using various information stored in the buffer ex404 and generating and adding new information as necessary, and by the modulation recording unit ex402, the reproduction demodulating unit ex403, and the servo control unit ex406 that record and reproduce information through the optical head ex401 while being operated in a coordinated manner. The system control unit ex407 includes, for example, a microprocessor, and executes processing by causing a computer to execute a program for read and write.

Although the optical head ex401 irradiates a laser spot in the description, it may perform high-density recording using near field light.

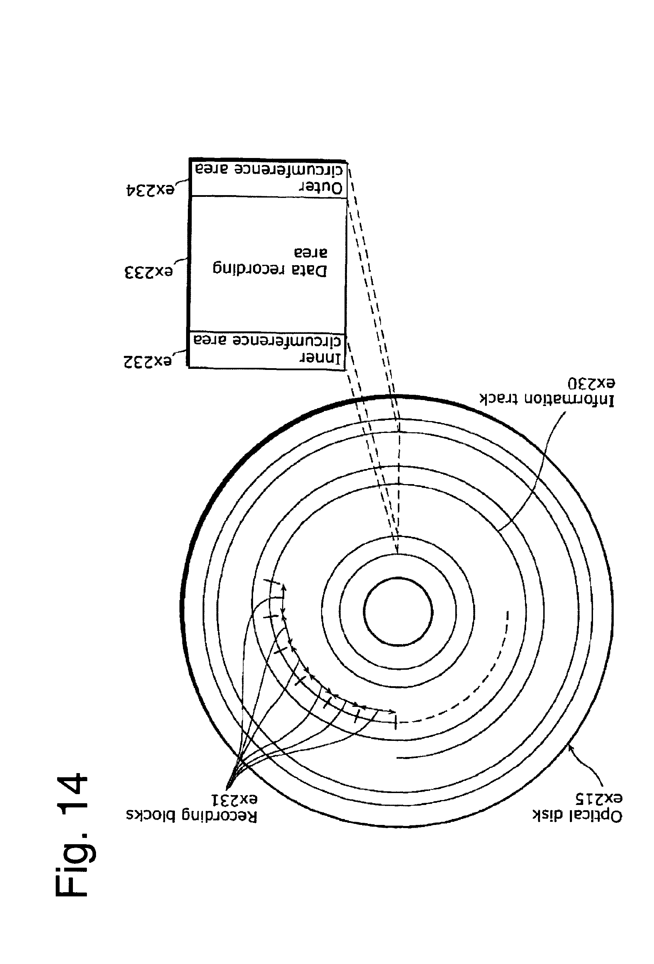

Figure 14 illustrates the recording medium ex215 that is the optical disk. On the recording surface of the recording medium ex215, guide grooves are spirally formed, and an information track ex230 records, in advance, address information indicating an absolute position on the disk according to change in a shape of the guide grooves. The address information includes information for determining positions of recording blocks ex231 that are a unit for recording data. Reproducing the information track ex230 and reading the address information in an apparatus that records and reproduces data can lead to determination of the positions of the recording blocks. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing/recording unit 400 reads and writes coded audio, coded video data, or multiplexed data obtained by multiplexing the coded audio and video data, from and on the data recording area ex233 of the recording medium ex215.

Although an optical disk having a layer, such as a DVD and a BD is described as an example in the description, the optical disk is not limited to such, and may be an optical disk having a multilayer structure and capable of being recorded on a part other than the surface. Furthermore, the optical disk may have a structure for multidimensional recording/reproduction, such as recording of information using light of colors with different wavelengths in the same portion of the optical disk and for recording information having different layers from various angles.

Furthermore, a car ex210 having an antenna ex205 can receive data from the satellite ex202 and others, and reproduce video on a display device such as a car navigation system ex211 set in the car ex210, in the digital broadcasting system ex200. Here, a configuration of the car navigation system ex211 will be a configuration, for example, including a GPS receiving unit from the configuration illustrated in Figure 11. The same will be true for the configuration of the computer ex111, the cellular phone ex114, and others.

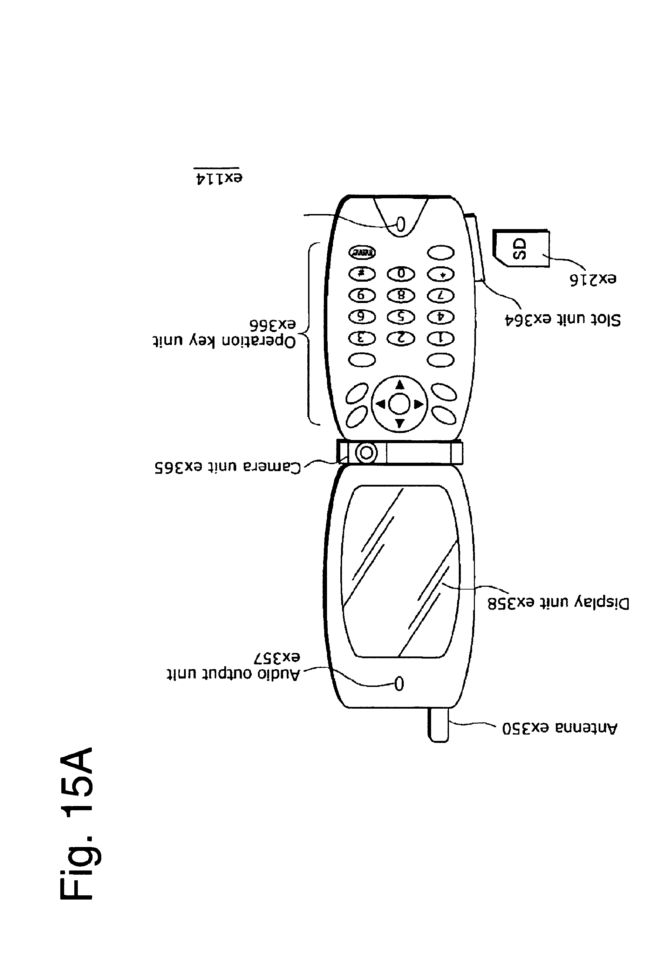

Figure 15A illustrates the cellular phone ex114 that uses the video coding method and the video decoding method described in embodiments. The cellular phone ex114 includes: an antenna ex350 for transmitting and receiving radio waves through the base station ex110; a camera unit ex365 capable of capturing moving and still images; and a display unit ex358 such as a liquid crystal display for displaying the data such as decoded video captured by the camera unit ex365 or received by the antenna ex350. The cellular phone ex114 further includes: a main body unit including an operation key unit ex366; an audio output unit ex357 such as a speaker for output of audio; an audio input unit ex356 such as a microphone for input of audio; a memory unit ex367 for storing captured video or still pictures, recorded audio, coded or decoded data of the received video, the still pictures, e-mails, or others; and a slot unit ex364 that is an interface unit for a recording medium that stores data in the same manner as the memory unit ex367.

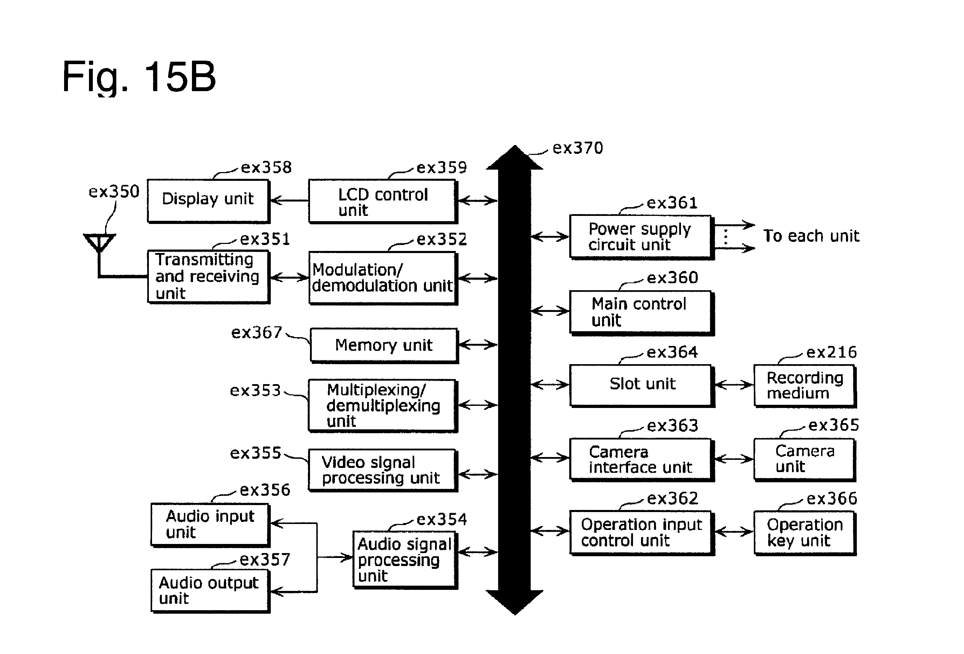

Next, an example of a configuration of the cellular phone ex114 will be described with reference to Figure 15B. In the cellular phone ex114, a main control unit ex360 designed to control overall each unit of the main body including the display unit ex358 as well as the operation key unit ex366 is connected mutually, via a synchronous bus ex370, to a power supply circuit unit ex361, an operation input control unit ex362, a video signal processing unit ex355, a camera interface unit ex363, a liquid crystal display (LCD) control unit ex359, a modulation/demodulation unit ex352, a multiplexing/demultiplexing unit ex353, an audio signal processing unit ex354, the slot unit ex364, and the memory unit ex367.

When a call-end key or a power key is turned ON by a user's operation, the power supply circuit unit ex361 supplies the respective units with power from a battery pack so as to activate the cell phone ex114.

In the cellular phone ex114, the audio signal processing unit ex354 converts the audio signals collected by the audio input unit ex356 in voice conversation mode into digital audio signals under the control of the main control unit ex360 including a CPU, ROM, and RAM. Then, the modulation/demodulation unit ex352 performs spread spectrum processing on the digital audio signals, and the transmitting and receiving unit ex351 performs digital-to-analog conversion and frequency conversion on the data, so as to transmit the resulting data via the antenna ex350.

Also, in the cellular phone ex114, the transmitting and receiving unit ex351 amplifies the data received by the antenna ex350 in voice conversation mode and performs frequency conversion and the analog-to-digital conversion on the data. Then, the modulation/demodulation unit ex352 performs inverse spread spectrum processing on the data, and the audio signal processing unit ex354 converts it into analog audio signals, so as to output them via the audio output unit ex356.

Furthermore, when an e-mail in data communication mode is transmitted, text data of the e-mail inputted by operating the operation key unit ex366 and others of the main body is sent out to the main control unit ex360 via the operation input control unit ex362. The main control unit ex360 causes the modulation/demodulation unit ex352 to perform spread spectrum processing on the text data, and the transmitting and receiving unit ex351 performs the digital-to-analog conversion and the frequency conversion on the resulting data to transmit the data to the base station ex110 via the antenna ex350. When an e-mail is received, processing that is approximately inverse to the processing for transmitting an e-mail is performed on the received data, and the resulting data is provided to the display unit ex358.

When video, still images, or video and audio in data communication mode is or are transmitted, the video signal processing unit ex355 compresses and codes video signals supplied from the camera unit ex365 using the video coding method shown in each of embodiments, and transmits the coded video data to the multiplexing/demultiplexing unit ex353. In contrast, during when the camera unit ex365 captures video, still images, and others, the audio signal processing unit ex354 codes audio signals collected by the audio input unit ex356, and transmits the coded audio data to the multiplexing/demultiplexing unit ex353.

The multiplexing/demultiplexing unit ex353 multiplexes the coded video data supplied from the video signal processing unit ex355 and the coded audio data supplied from the audio signal processing unit ex354, using a predetermined method.

Then, the modulation/demodulation unit ex352 performs spread spectrum processing on the multiplexed data, and the transmitting and receiving unit ex351 performs digital-to-analog conversion and frequency conversion on the data so as to transmit the resulting data via the antenna ex350.

When receiving data of a video file which is linked to a Web page and others in data communication mode or when receiving an e-mail with video and/or audio attached, in order to decode the multiplexed data received via the antenna ex350, the multiplexing/demultiplexing unit ex353 demultiplexes the multiplexed data into a video data bit stream and an audio data bit stream, and supplies the video signal processing unit ex355 with the coded video data and the audio signal processing unit ex354 with the coded audio data, through the synchronous bus ex370. The video signal processing unit ex355 decodes the video signal using a video decoding method corresponding to the coding method shown in each of embodiments, and then the display unit ex358 displays, for instance, the video and still images included in the video file linked to the Web page via the LCD control unit ex359. Furthermore, the audio signal processing unit ex354 decodes the audio signal, and the audio output unit ex357 provides the audio.

Furthermore, similarly to the television ex300, a terminal such as the cellular phone ex114 probably have 3 types of implementation configurations including not only (i) a transmitting and receiving terminal including both a coding apparatus and a decoding apparatus, but also (ii) a transmitting terminal including only a coding apparatus and (iii) a receiving terminal including only a decoding apparatus. Although the digital broadcasting system ex200 receives and transmits the multiplexed data obtained by multiplexing audio data onto video data in the description, the multiplexed data may be data obtained by multiplexing not audio data but character data related to video onto video data, and may be not multiplexed data but video data itself.

As such, the video coding method and the video decoding method in each of embodiments can be used in any of the devices and systems described. Thus, the advantages described in each of embodiments can be obtained. Furthermore, the present invention is not limited to embodiments, and various modifications and revisions are possible without departing from the scope of the present invention.

Video data can be generated by switching, as necessary, between (i) the video coding method or the video coding apparatus shown in each of embodiments and (ii) a video coding method or a video coding apparatus in conformity with a different standard, such as MPEG-2, MPEG4-AVC, and VC-1.

Here, when a plurality of video data that conforms to the different standards is generated and is then decoded, the decoding methods need to be selected to conform to the different standards. However, since to which standard each of the plurality of the video data to be decoded conform cannot be detected, there is a problem that an appropriate decoding method cannot be selected.

In order to solve the problem, multiplexed data obtained by multiplexing audio data and others onto video data has a structure including identification information indicating to which standard the video data conforms. The specific structure of the multiplexed data including the video data generated in the video coding method and by the video coding apparatus shown in each of embodiments will be hereinafter described. The multiplexed data is a digital stream in the MPEG2-Transport Stream format.

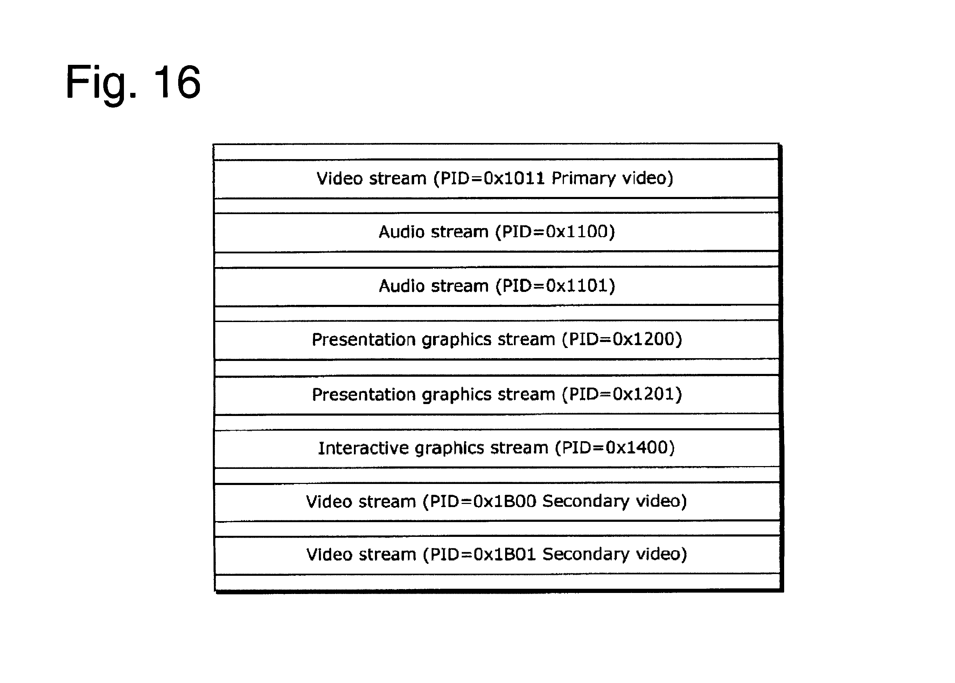

Figure 16 illustrates a structure of the multiplexed data. As illustrated in Figure 16, the multiplexed data can be obtained by multiplexing at least one of a video stream, an audio stream, a presentation graphics stream (PG), and an interactive graphics stream. The video stream represents primary video and secondary video of a movie, the audio stream (IG) represents a primary audio part and a secondary audio part to be mixed with the primary audio part, and the presentation graphics stream represents subtitles of the movie. Here, the primary video is normal video to be displayed on a screen, and the secondary video is video to be displayed on a smaller window in the primary video. Furthermore, the interactive graphics stream represents an interactive screen to be generated by arranging the GUI components on a screen. The video stream is coded in the video coding method or by the video coding apparatus shown in each of embodiments, or in a video coding method or by a video coding apparatus in conformity with a conventional standard, such as MPEG-2, MPEG4-AVC, and VC-1. The audio stream is coded in accordance with a standard, such as Dolby-AC-3, Dolby Digital Plus, MLP, DTS, DTS-HD, and linear PCM.

Each stream included in the multiplexed data is identified by PID. For example, 0x1011 is allocated to the video stream to be used for video of a movie, 0x1100 to 0x111F are allocated to the audio streams, 0x1200 to 0x121 F are allocated to the presentation graphics streams, 0x1400 to 0x141F are allocated to the interactive graphics streams, 0x1B00 to 0x1B1F are allocated to the video streams to be used for secondary video of the movie, and 0x1A00 to 0x1 A1 F are allocated to the audio streams to be used for the secondary video to be mixed with the primary audio.

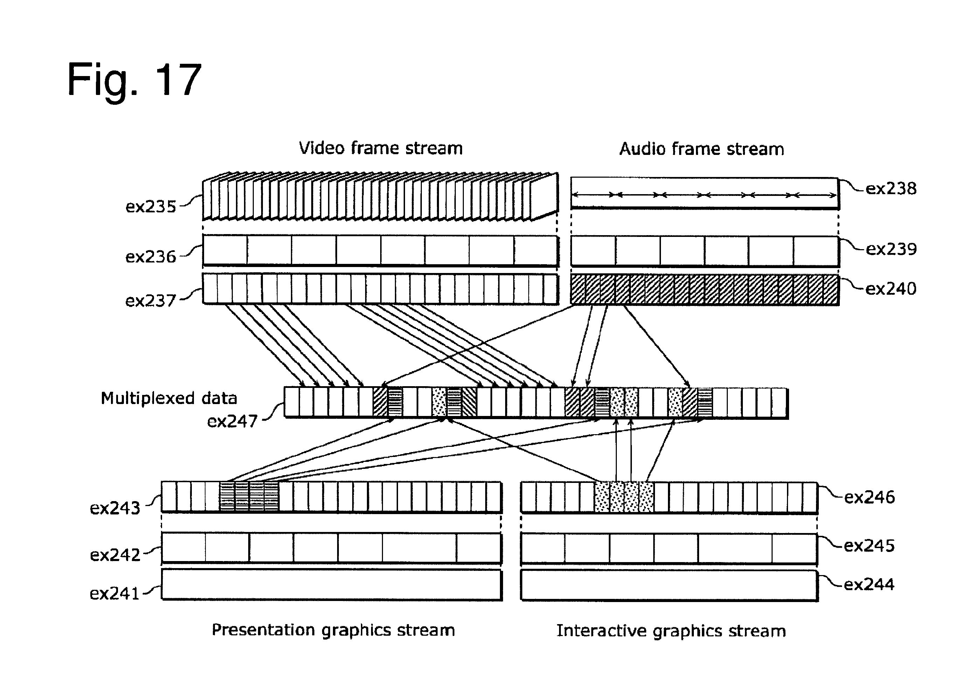

Figure 17 schematically illustrates how data is multiplexed. First, a video stream ex235 composed of video frames and an audio stream ex238 composed of audio frames are transformed into a stream of PES packets ex236 and a stream of PES packets ex239, and further into TS packets ex237 and TS packets ex240, respectively. Similarly, data of a presentation graphics stream ex241 and data of an interactive graphics stream ex244 are transformed into a stream of PES packets ex242 and a stream of PES packets ex245, and further into TS packets ex243 and TS packets ex246, respectively. These TS packets are multiplexed into a stream to obtain multiplexed data ex247.

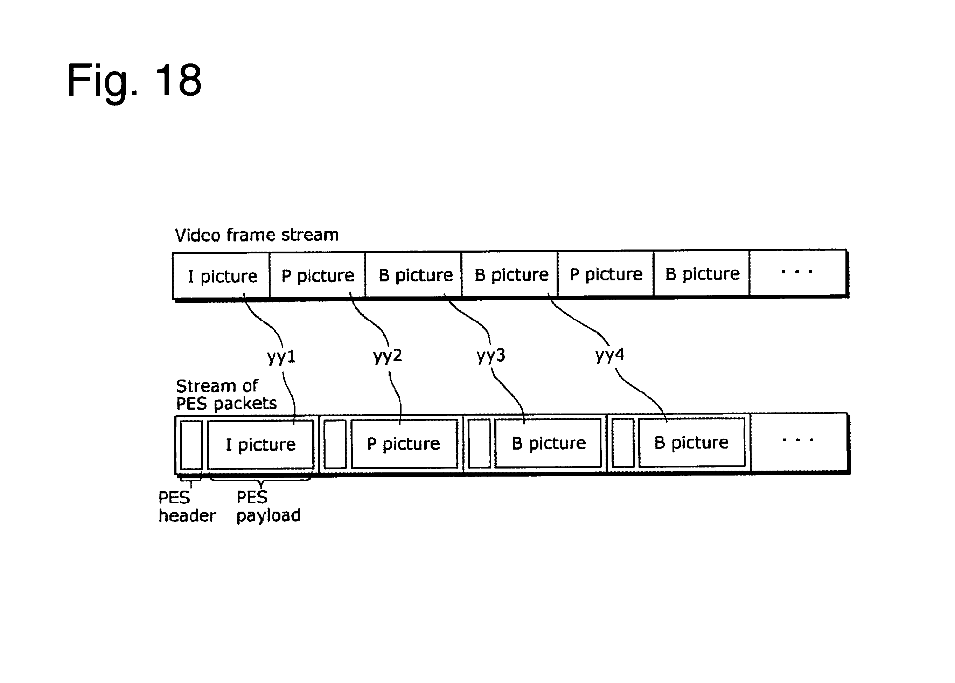

Figure 18 illustrates how a video stream is stored in a stream of PES packets in more detail. The first bar in Figure 18 shows a video frame stream in a video stream. The second bar shows the stream of PES packets. As indicated by arrows denoted as yy1, yy2, yy3, and yy4 in Figure 18, the video stream is divided into pictures as I pictures, B pictures, and P pictures each of which is a video presentation unit, and the pictures are stored in a payload of each of the PES packets. Each of the PES packets has a PES header, and the PES header stores a Presentation Time-Stamp (PTS) indicating a display time of the picture, and a Decoding Time-Stamp (DTS) indicating a decoding time of the picture.

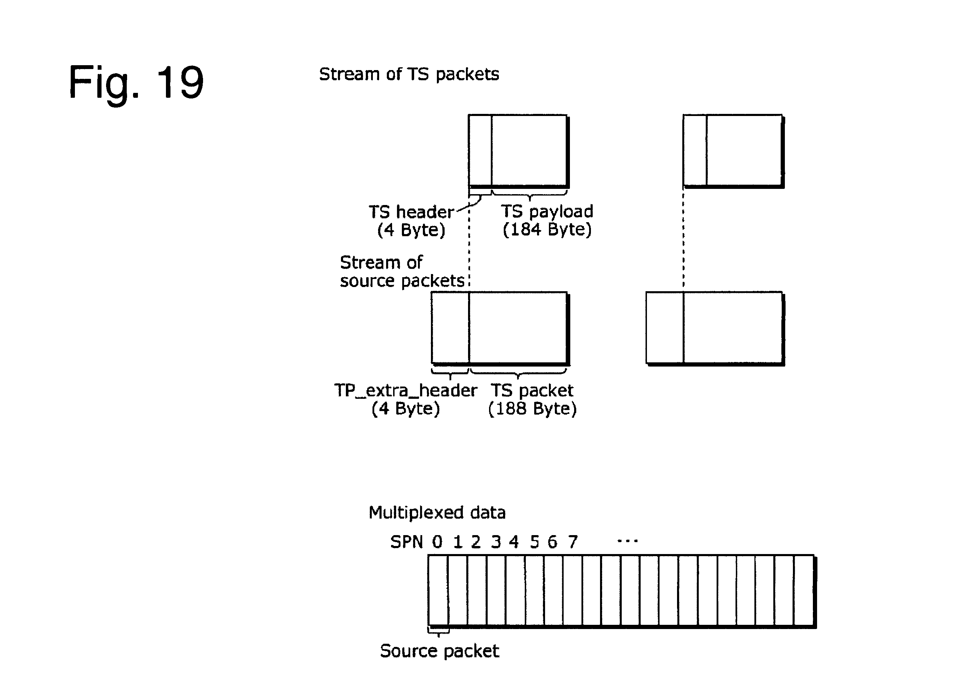

Figure 19 illustrates a format of TS packets to be finally written on the multiplexed data. Each of the TS packets is a 188-byte fixed length packet including a 4-byte TS header having information, such as a PID for identifying a stream and a 184-byte TS payload for storing data. The PES packets are divided, and stored in the TS payloads, respectively. When a BD ROM is used, each of the TS packets is given a 4-byte TP_Extra_Header, thus resulting in 192-byte source packets. The source packets are written on the multiplexed data. The TP_Extra_Header stores information such as an Arrival_Time_Stamp (ATS). The ATS shows a transfer start time at which each of the TS packets is to be transferred to a PID filter. The source packets are arranged in the multiplexed data as shown at the bottom of Figure 19. The numbers incrementing from the head of the multiplexed data are called source packet numbers (SPNs).

Each of the TS packets included in the multiplexed data includes not only streams of audio, video, subtitles and others, but also a Program Association Table (PAT), a Program Map Table (PMT), and a Program Clock Reference (PCR). The PAT shows what a PID in a PMT used in the multiplexed data indicates, and a PID of the PAT itself is registered as zero. The PMT stores PIDs of the streams of video, audio, subtitles and others included in the multiplexed data, and attribute information of the streams corresponding to the PIDs. The PMT also has various descriptors relating to the multiplexed data. The descriptors have information such as copy control information showing whether copying of the multiplexed data is permitted or not. The PCR stores STC time information corresponding to an ATS showing when the PCR packet is transferred to a decoder, in order to achieve synchronization between an Arrival Time Clock (ATC) that is a time axis of ATSs, and an System Time Clock (STC) that is a time axis of PTSs and DTSs.

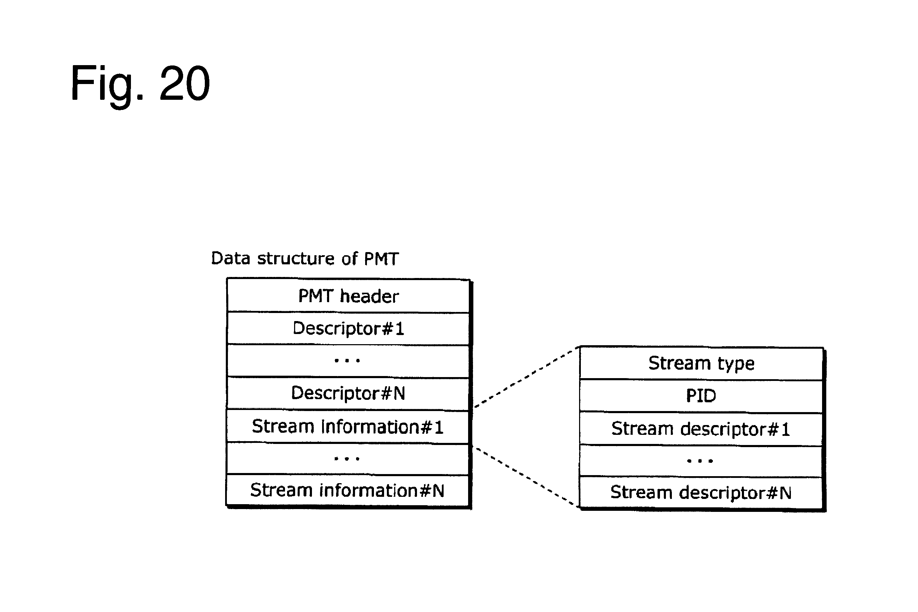

Figure 20 illustrates the data structure of the PMT in detail. A PMT header is disposed at the top of the PMT. The PMT header describes the length of data included in the PMT and others. A plurality of descriptors relating to the multiplexed data is disposed after the PMT header. Information such as the copy control information is described in the descriptors. After the descriptors, a plurality of pieces of stream information relating to the streams included in the multiplexed data is disposed. Each piece of stream information includes stream descriptors each describing information, such as a stream type for identifying a compression codec of a stream, a stream PID, and stream attribute information (such as a frame rate or an aspect ratio). The stream descriptors are equal in number to the number of streams in the multiplexed data. When the multiplexed data is recorded on a recording medium and others, it is recorded together with multiplexed data information files.

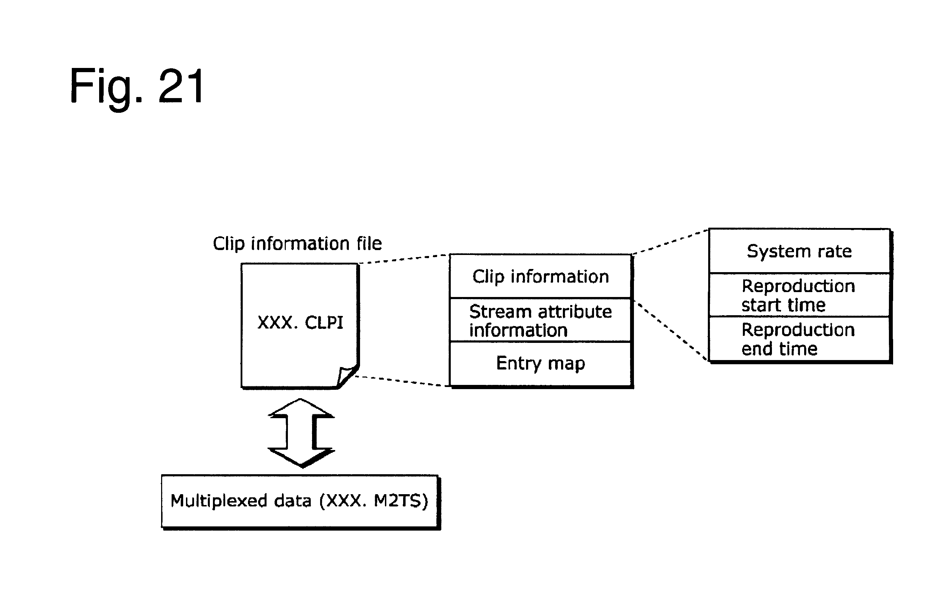

Each of the multiplexed data information files is management information of the multiplexed data as shown in Figure 21. The multiplexed data information files are in one to one correspondence with the multiplexed data, and each of the files includes multiplexed data information, stream attribute information, and an entry map. As illustrated in Figure 21, the multiplexed data includes a system rate, a reproduction start time, and a reproduction end time. The system rate indicates the maximum transfer rate at which a system target decoder to be described later transfers the multiplexed data to a PID filter. The intervals of the ATSs included in the multiplexed data are set to not higher than a system rate. The reproduction start time indicates a PTS in a video frame at the head of the multiplexed data. An interval of one frame is added to a PTS in a video frame at the end of the multiplexed data, and the PTS is set to the reproduction end time.

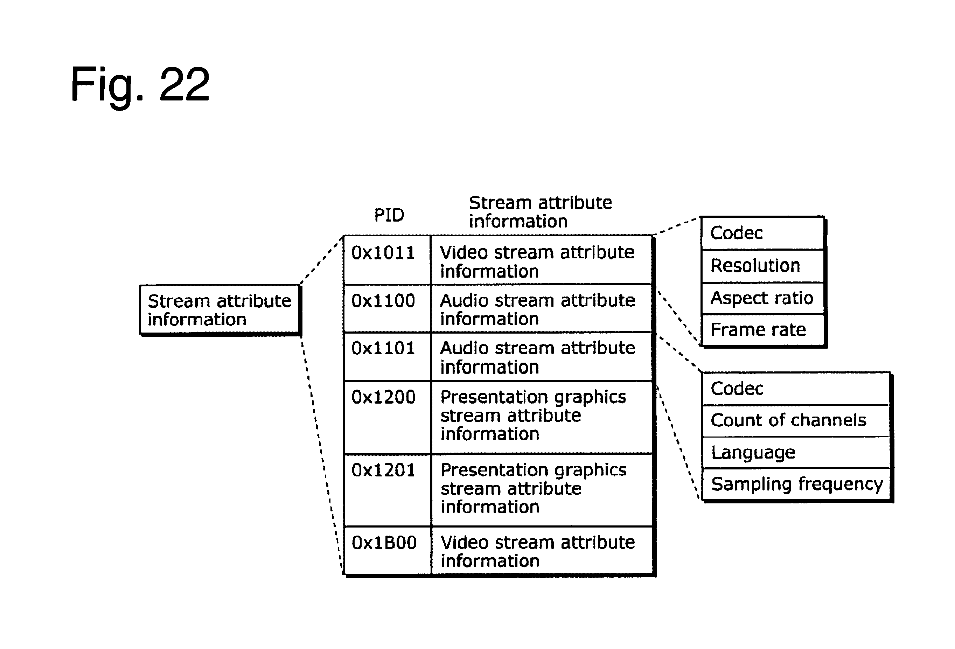

As shown in Figure 22, a piece of attribute information is registered in the stream attribute information, for each PID of each stream included in the multiplexed data. Each piece of attribute information has different information depending on whether the corresponding stream is a video stream, an audio stream, a presentation graphics stream, or an interactive graphics stream. Each piece of video stream attribute information carries information including what kind of compression codec is used for compressing the video stream, and the resolution, aspect ratio and frame rate of the pieces of picture data that is included in the video stream. Each piece of audio stream attribute information carries information including what kind of compression codec is used for compressing the audio stream, how many channels are included in the audio stream, which language the audio stream supports, and how high the sampling frequency is. The video stream attribute information and the audio stream attribute information are used for initialization of a decoder before the player plays back the information.

The multiplexed data to be used is of a stream type included in the PMT. Furthermore, when the multiplexed data is recorded on a recording medium, the video stream attribute information included in the multiplexed data information is used. More specifically, the video coding method or the video coding apparatus described in each of embodiments includes a step or a unit for allocating unique information indicating video data generated by the video coding method or the video coding apparatus in each of embodiments, to the stream type included in the PMT or the video stream attribute information. With the configuration, the video data generated by the video coding method or the video coding apparatus described in each of embodiments can be distinguished from video data that conforms to another standard.

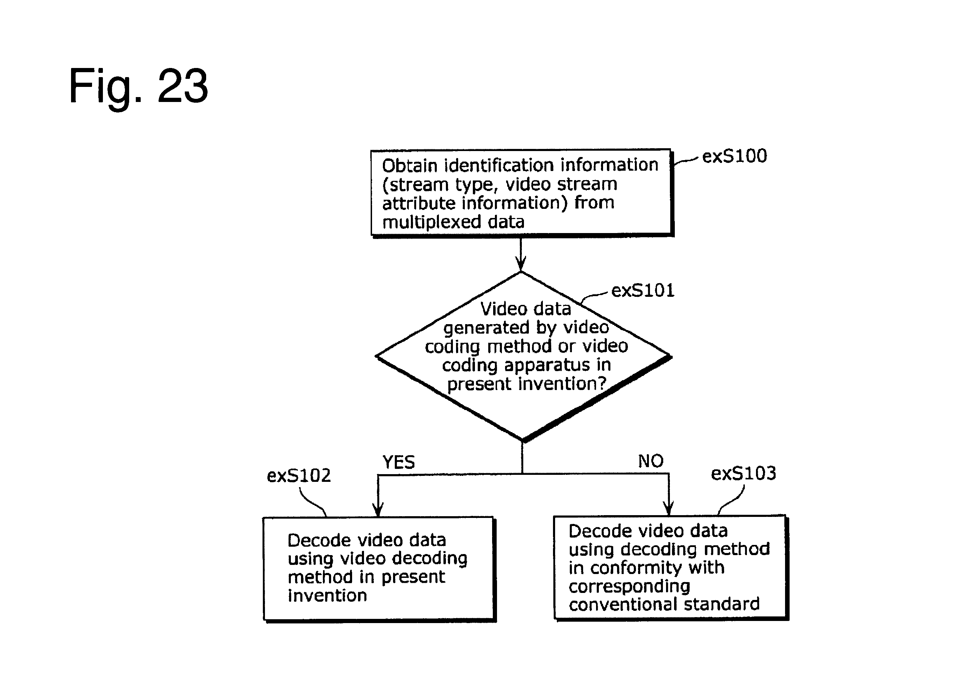

Furthermore, Figure 23 illustrates steps of the video decoding method. In Step exS100, the stream type included in the PMT or the video stream attribute information is obtained from the multiplexed data. Next, in Step exS101, it is determined whether or not the stream type or the video stream attribute information indicates that the multiplexed data is generated by the video coding method or the video coding apparatus in each of embodiments. When it is determined that the stream type or the video stream attribute information indicates that the multiplexed data is generated by the video coding method or the video coding apparatus in each of embodiments, in Step exS102, decoding is performed by the video decoding method in each of embodiments. Furthermore, when the stream type or the video stream attribute information indicates conformance to the conventional standards, such as MPEG-2, MPEG4-AVC, and VC-1, in Step exS103, decoding is performed by a video decoding method in conformity with the conventional standards.

As such, allocating a new unique value to the stream type or the video stream attribute information enables determination whether or not the video decoding method or the video decoding apparatus that is described in each of embodiments can perform decoding. Even when multiplexed data that conforms to a different standard, an appropriate decoding method or apparatus can be selected. Thus, it becomes possible to decode information without any error. Furthermore, the video coding method or apparatus, or the video decoding method or apparatus can be used in the devices and systems described above.

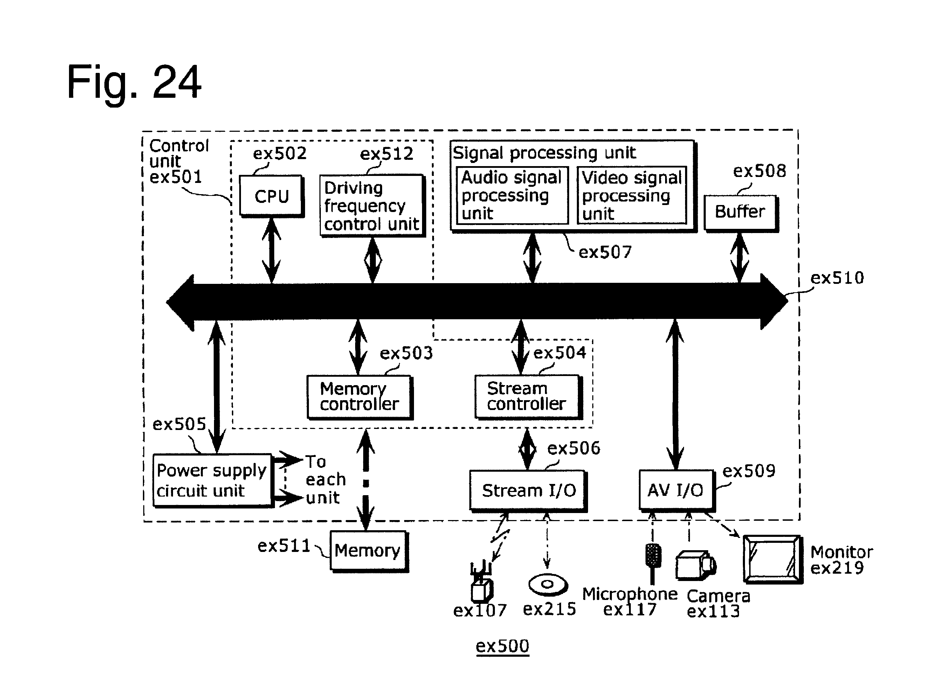

Each of the video coding method, the video coding apparatus, the video decoding method, and the video decoding apparatus in each of embodiments is typically achieved in the form of an integrated circuit or a Large Scale Integrated (LSI) circuit. As an example of the LSI, Figure 24 illustrates a configuration of the LSI ex500 that is made into one chip. The LSI ex500 includes elements ex501, ex502, ex503, ex504, ex505, ex506, ex507, ex508, and ex509 to be described below, and the elements are connected to each other through a bus ex510. The power supply circuit unit ex505 is activated by supplying each of the elements with power when the power supply circuit unit ex505 is turned on.

For example, when coding is performed, the LSI ex500 receives an AV signal from a microphone ex117, a camera ex113, and others through an AV IO ex509 under control of a control unit ex501 including a CPU ex502, a memory controller ex503, a stream controller ex504, and a driving frequency control unit ex512. The received AV signal is temporarily stored in an external memory ex511, such as an SDRAM. Under control of the control unit ex501, the stored data is segmented into data portions according to the processing amount and speed to be transmitted to a signal processing unit ex507. Then, the signal processing unit ex507 codes an audio signal and/or a video signal. Here, the coding of the video signal is the coding described in each of embodiments. Furthermore, the signal processing unit ex507 sometimes multiplexes the coded audio data and the coded video data, and a stream IO ex506 provides the multiplexed data outside. The provided multiplexed data is transmitted to the base station ex107, or written on the recording media ex215. When data sets are multiplexed, the data should be temporarily stored in the buffer ex508 so that the data sets are synchronized with each other.

Although the memory ex511 is an element outside the LSI ex500, it may be included in the LSI ex500. The buffer ex508 is not limited to one buffer, but may be composed of buffers. Furthermore, the LSI ex500 may be made into one chip or a plurality of chips.

Furthermore, although the control unit ex510 includes the CPU ex502, the memory controller ex503, the stream controller ex504, the driving frequency control unit ex512, the configuration of the control unit ex510 is not limited to such. For example, the signal processing unit ex507 may further include a CPU. Inclusion of another CPU in the signal processing unit ex507 can improve the processing speed. Furthermore, as another example, the CPU ex502 may serve as or be a part of the signal processing unit ex507, and, for example, may include an audio signal processing unit. In such a case, the control unit ex501 includes the signal processing unit ex507 or the CPU ex502 including a part of the signal processing unit ex507.

The name used here is LSI, but it may also be called IC, system LSI, super LSI, or ultra LSI depending on the degree of integration.

Moreover, ways to achieve integration are not limited to the LSI, and a special circuit or a general purpose processor and so forth can also achieve the integration. Field Programmable Gate Array (FPGA) that can be programmed after manufacturing LSIs or a reconfigurable processor that allows re-configuration of the connection or configuration of an LSI can be used for the same purpose. In the future, with advancement in semiconductor technology, a brand-new technology may replace LSI. The functional blocks can be integrated using such a technology. The possibility is that the present invention is applied to biotechnology.

When video data generated in the video coding method or by the video coding apparatus described in each of embodiments is decoded, compared to when video data that conforms to a conventional standard, such as MPEG-2, MPEG4-AVC, and VC-1 is decoded, the processing amount probably increases. Thus, the LSI ex500 needs to be set to a driving frequency higher than that of the CPU ex502 to be used when video data in conformity with the conventional standard is decoded. However, when the driving frequency is set higher, there is a problem that the power consumption increases.

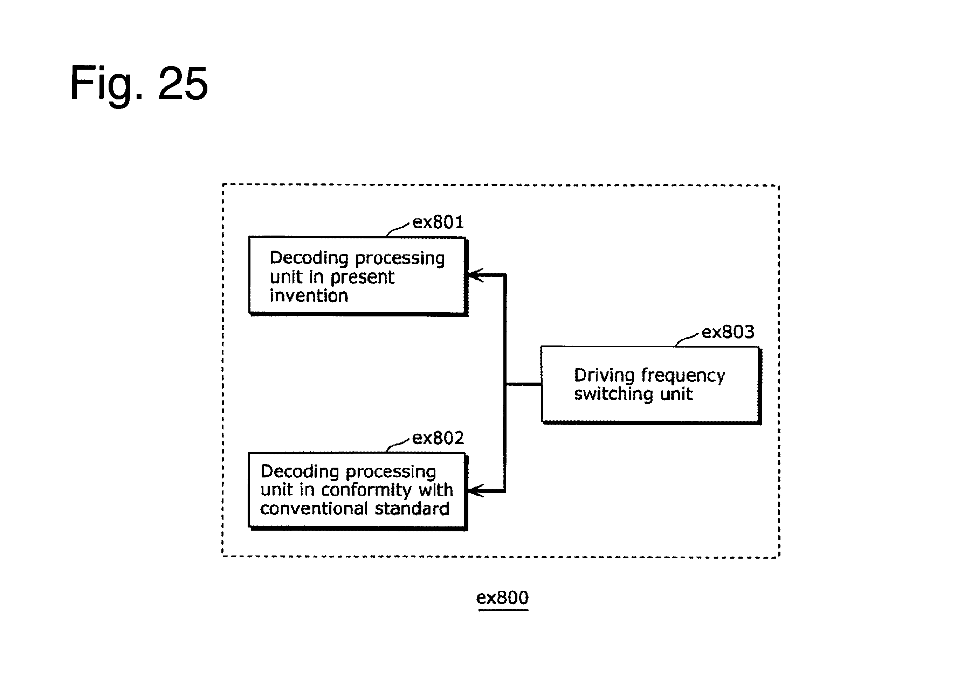

In order to solve the problem, the video decoding apparatus, such as the television ex300 and the LSI ex500 is configured to determine to which standard the video data conforms, and switch between the driving frequencies according to the determined standard. Figure 25 illustrates a configuration ex800. A driving frequency switching unit ex803 sets a driving frequency to a higher driving frequency when video data is generated by the video coding method or the video coding apparatus described in each of embodiments. Then, the driving frequency switching unit ex803 instructs a decoding processing unit ex801 that executes the video decoding method described in each of embodiments to decode the video data. When the video data conforms to the conventional standard, the driving frequency switching unit ex803 sets a driving frequency to a lower driving frequency than that of the video data generated by the video coding method or the video coding apparatus described in each of embodiments. Then, the driving frequency switching unit ex803 instructs the decoding processing unit ex802 that conforms to the conventional standard to decode the video data.

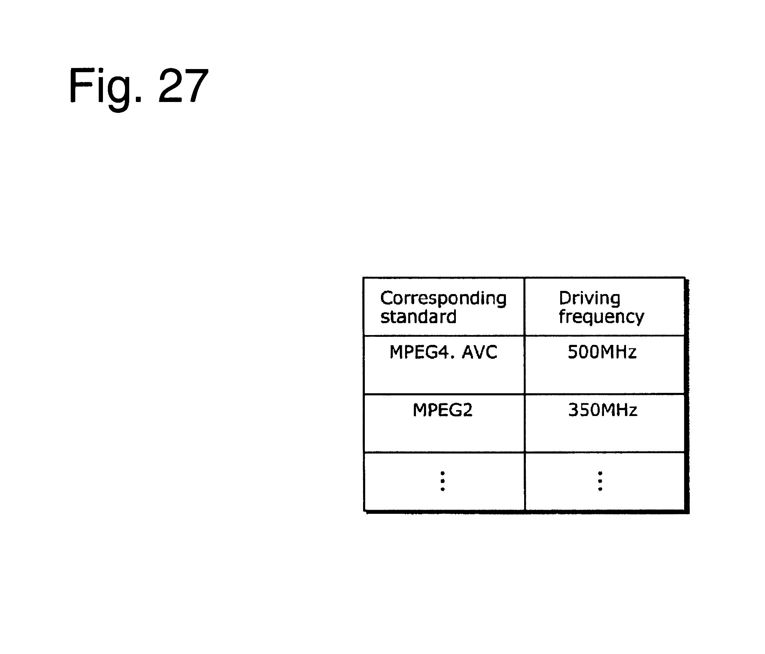

More specifically, the driving frequency switching unit ex803 includes the CPU ex502 and the driving frequency control unit ex512 in Figure 24. Here, each of the decoding processing unit ex801 that executes the video decoding method described in each of embodiments and the decoding processing unit ex802 that conforms to the conventional standard corresponds to the signal processing unit ex507 in Figure 24. The CPU ex502 determines to which standard the video data conforms. Then, the driving frequency control unit ex512 determines a driving frequency based on a signal from the CPU ex502. Furthermore, the signal processing unit ex507 decodes the video data based on the signal from the CPU ex502. For example, the identification information described is probably used for identifying the video data. The identification information is not limited to the one described above but may be any information as long as the information indicates to which standard the video data conforms. For example, when which standard video data conforms to can be determined based on an external signal for determining that the video data is used for a television or a disk, etc., the determination may be made based on such an external signal. Furthermore, the CPU ex502 selects a driving frequency based on, for example, a look-up table in which the standards of the video data are associated with the driving frequencies as shown in Figure 27. The driving frequency can be selected by storing the look-up table in the buffer ex508 and in an internal memory of an LSI, and with reference to the look-up table by the CPU ex502.

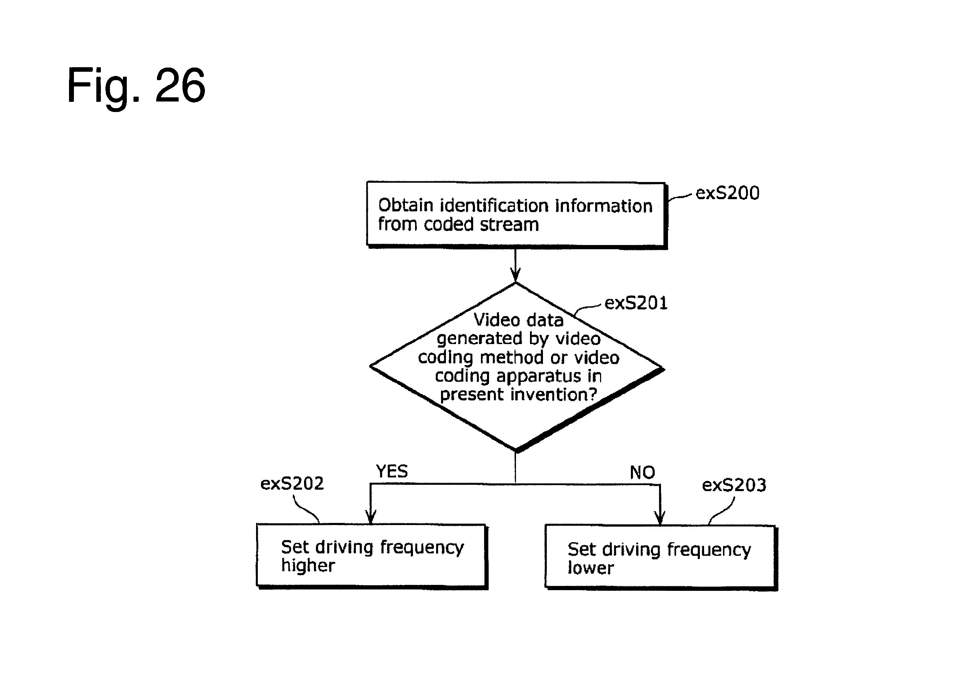

Figure 26 illustrates steps for executing a method. First, in Step exS200, the signal processing unit ex507 obtains identification information from the multiplexed data. Next, in Step exS201, the CPU ex502 determines whether or not the video data is generated by the coding method and the coding apparatus described in each of embodiments, based on the identification information. When the video data is generated by the video coding method and the video coding apparatus described in each of embodiments, in Step exS202, the CPU ex502 transmits a signal for setting the driving frequency to a higher driving frequency to the driving frequency control unit ex512. Then, the driving frequency control unit ex512 sets the driving frequency to the higher driving frequency. On the other hand, when the identification information indicates that the video data conforms to the conventional standard, such as MPEG-2, MPEG4-AVC, and VC-1, in Step exS203, the CPU ex502 transmits a signal for setting the driving frequency to a lower driving frequency to the driving frequency control unit ex512. Then, the driving frequency control unit ex512 sets the driving frequency to the lower driving frequency than that in the case where the video data is generated by the video coding method and the video coding apparatus described in each of embodiment.

Furthermore, along with the switching of the driving frequencies, the power conservation effect can be improved by changing the voltage to be applied to the LSI ex500 or an apparatus including the LSI ex500. For example, when the driving frequency is set lower, the voltage to be applied to the LSI ex500 or the apparatus including the LSI ex500 is probably set to a voltage lower than that in the case where the driving frequency is set higher.

Furthermore, when the processing amount for decoding is larger, the driving frequency may be set higher, and when the processing amount for decoding is smaller, the driving frequency may be set lower as the method for setting the driving frequency. Thus, the setting method is not limited to the ones described above. For example, when the processing amount for decoding video data in conformity with MPEG 4 -AVC is larger than the processing amount for decoding video data generated by the video coding method and the video coding apparatus described in each of embodiments, the driving frequency is probably set in reverse order to the setting described above.

Furthermore, the method for setting the driving frequency is not limited to the method for setting the driving frequency lower. For example, when the identification information indicates that the video data is generated by the video coding method and the video coding apparatus described in each of embodiments, the voltage to be applied to the LSI ex500 or the apparatus including the LSI ex500 is probably set higher. When the identification information indicates that the video data conforms to the conventional standard, such as MPEG-2, MPEG4-AVC, and VC-1, the voltage to be applied to the LSI ex500 or the apparatus including the LSI ex500 is probably set lower. As another example, when the identification information indicates that the video data is generated by the video coding method and the video coding apparatus described in each of embodiments, the driving of the CPU ex502 does not probably have to be suspended. When the identification information indicates that the video data conforms to the conventional standard, such as MPEG-2, MPEG4-AVC, and VC-1, the driving of the CPU ex502 is probably suspended at a given time because the CPU ex502 has extra processing capacity. Even when the identification information indicates that the video data is generated by the video coding method and the video coding apparatus described in each of embodiments, in the case where the CPU ex502 has extra processing capacity, the driving of the CPU ex502 is probably suspended at a given time. In such a case, the suspending time is probably set shorter than that in the case where when the identification information indicates that the video data conforms to the conventional standard, such as MPEG-2, MPEG4-AVC, and VC-1. Accordingly, the power conservation effect can be improved by switching between the driving frequencies in accordance with the standard to which the video data conforms. Furthermore, when the LSI ex500 or the apparatus including the LSI ex500 is driven using a battery, the battery life can be extended with the power conservation effect.

There are cases where a plurality of video data that conforms to different standards, is provided to the devices and systems, such as a television and a mobile phone. In order to enable decoding the plurality of video data that conforms to the different standards, the signal processing unit ex507 of the LSI ex500 needs to conform to the different standards. However, the problems of increase in the scale of the circuit of the LSI ex500 and increase in the cost arise with the individual use of the signal processing units ex507 that conform to the respective standards.

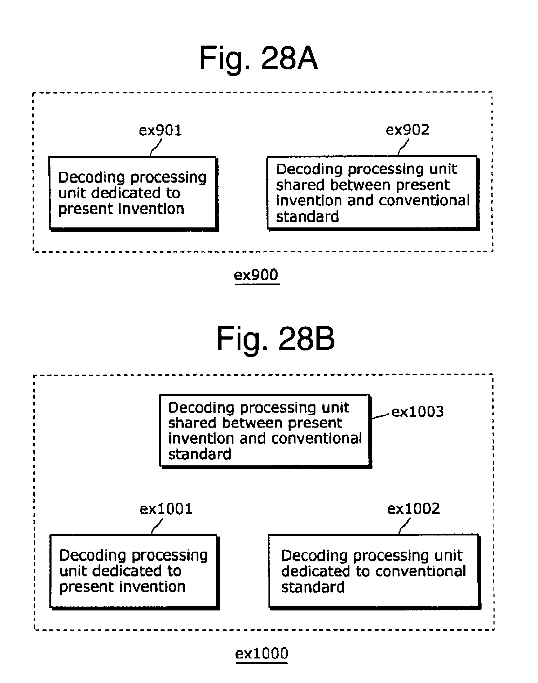

In order to solve the problem, what is conceived is a configuration in which the decoding processing unit for implementing the video decoding method described in each of embodiments and the decoding processing unit that conforms to the conventional standard, such as MPEG-2, MPEG4-AVC, and VC-1 are partly shared. Ex900 in Figure 28(a) shows an example of the configuration. For example, the video decoding method described in each of embodiments and the video decoding method that conforms to MPEG4-AVC have, partly in common, the details of processing, such as entropy coding, inverse quantization, deblocking filtering, and motion compensated prediction. The details of processing to be shared probably includes use of a decoding processing unit ex902 that conforms to MPEG4-AVC. In contrast, a dedicated decoding processing unit ex901 is probably used for other processing unique to the present invention. Since the present invention is characterized by a deblocking filtering, for example, the dedicated decoding processing unit ex901 is used for deblocking filtering. Otherwise, the decoding processing unit is probably shared for one of the entropy coding, inverse quantization, and motion compensated prediction, or all of the processing. The decoding processing unit for implementing the video decoding method described in each of embodiments may be shared for the processing to be shared, and a dedicated decoding processing unit may be used for processing unique to that of MPEG4-AVC.

Furthermore, ex1000 in Figure 28(b) shows another example in that processing is partly shared. This example uses a configuration including a dedicated decoding processing unit ex1001 that supports the processing unique to the present invention, a dedicated decoding processing unit ex1002 that supports the processing unique to another conventional standard, and a decoding processing unit ex1003 that supports processing to be shared between the video decoding method in the present invention and the conventional video decoding method. Here, the dedicated decoding processing units ex1001 and ex1002 are not necessarily specialized for the processing of the present invention and the processing of the conventional standard, respectively, and may be the ones capable of implementing general processing.

Furthermore, the configuration can be implemented by the LSI ex500.

As such, reducing the scale of the circuit of an LSI and reducing the cost are possible by sharing the decoding processing unit for the processing to be shared between the video decoding method in the present invention and the video decoding method in conformity with the conventional standard.

Summarizing, the present invention relates to improving the performance of the spatial prediction by reducing the complexity of edge detection for the sub-pel edge based prediction for encoding and decoding of a current image block. In particular, the coding type and/or the coded values of at least one block adjacent to the current block are evaluated. Based thereon it is decided whether an edge detection based on gradient calculation is performed. According to whether the at least one adjacent block includes an edge or not, a type of spatial prediction and/or prediction direction may be selected at the encoder or at the decoder.

**Claims**

1. A method for spatially predicting the values at each pixel position of a block of pixels in an image, the method comprising the steps of:

   deciding whether to calculate a vertical and/or a horizontal gradient for at least one pixel of an adjacent block based on a type of coding and/or coded values of the adjacent block;
   when it is decided that the vertical and/or horizontal gradient is to be calculated,
   calculating vertical and horizontal gradient for at least one pixel of the adjacent block and determining based on the result of calculation whether the adjacent block includes an edge;
   selecting, based on the result of the edge determination, a type of the spatial prediction and/or a direction of the spatial prediction to be applied to the current block; and applying the selected spatial prediction accordingly.

2. The method according to claim 1 wherein
   the type of coding includes at least one of: prediction mode indicating whether spatial or temporal prediction has been applied to the adjacent block and/or specifying the particular prediction method, size of the adjacent block, or values of transformation coefficients of the adjacent block transformed in frequency domain; and
   the coded values of the adjacent block are coefficients obtained by a linear transformation of the adjacent block into frequency domain.

3. The method according to claim 1 or 2 wherein the decision step further comprises the step of evaluating at least one of the conditions:

   a) whether the adjacent block has been coded using DC mode;
   b) whether the adjacent block has been coded by determining a prediction block for the adjacent block using spatial prediction along one of fixed predefined directions, calculating a prediction error block by subtracting the prediction block from the current block, transforming the prediction error block into a block of frequency coefficients, wherein the values of at least the two lowest AC coefficients (AC01, AC10) are zero;
   c) whether the adjacent block has been coded by determining a prediction block for the adjacent block using temporal prediction or spatial prediction along one of fixed predefined directions, calculating a prediction error block by subtracting the prediction block from the current block, transforming the prediction error block into a block of frequency coefficients, wherein the values of all AC coefficients are zero; and
   d) whether the adjacent block has been coded by a directional spatial prediction, wherein the direction of the directional spatial prediction does not cross the current block.

4. The method according to claim 3, wherein the step of deciding whether to calculate a vertical and/or a horizontal gradient decides negatively if in the evaluating step at least one of the conditions is fulfilled.

5. The method according to any of claims 1 to 4 wherein
   the step of selecting a type and/or a direction of spatial prediction is performed for encoding the current block with the selected type of spatial prediction depending on a rate distortion optimization decision, the selected spatial prediction being one of prediction by a uniform value for the entire current block, or prediction along the direction determined by the gradient calculation.

6. The method according to any of claims 1 to 4 wherein
   the step of selecting a direction of the spatial prediction is performed for decoding the current block, the current block being decoded by using spatial prediction along the selected direction.

7. The method according to any of claims 1 to 6 wherein
the vertical and/or horizontal gradient is calculated for a plurality of pixels in the adjacent block, the pixels being in proximity of the boundary of the adjacent block, the boundary being adjacent to the current block, the calculation being performed by convolution of the plurality of pixels with Sobel mask.

8. A computer program product comprising a computer-readable medium having a computer-readable program code embodied thereon, the program code being adapted to carry out the method according to any of claims 1 to 7.

9. An apparatus for spatially predicting the values at each pixel position of a block of pixels in an image, the method comprising the steps of:

a judging unit for deciding whether to calculate a vertical and/or a horizontal gradient for at least one pixel of an adjacent block based on a type of coding and/or coded values of the adjacent block;
a gradient calculator for, when it is decided that the vertical and/or horizontal gradient is to be calculated, calculating vertical and horizontal gradient for at least one pixel of the adjacent block;
an edge determination unit for determining whether the adjacent block includes an edge based on the result of calculation; and
a prediction design unit for selecting, based on the result of the edge determination, a type of the spatial prediction and/or a direction of the spatial prediction to be applied to the current block, wherein the spatial predictor is configured to apply the selected spatial prediction accordingly.

10. The apparatus according to claim 9 wherein
the type of coding includes at least one of: prediction mode indicating whether spatial or temporal prediction has been applied to the adjacent block and/or specifying the particular prediction method, size of the adjacent block, or values of transformation coefficients of the adjacent block transformed in frequency domain; and
the coded values of the adjacent block are coefficients obtained by a linear transformation of the adjacent block into frequency domain.

11. The apparatus according to claim 1 or 2 wherein the judging unit is configured to evaluate at least one of the conditions:

e) whether the adjacent block has been coded using DC mode;
f) whether the adjacent block has been coded by determining a prediction block for the adjacent block using spatial prediction along one of fixed predefined directions, calculating a prediction error block by subtracting the prediction block from the current block, transforming the prediction error block into a block of frequency coefficients, wherein the values of at least the two lowest AC coefficients (AC01, AC10) are zero;
g) whether the adjacent block has been coded by determining a prediction block for the adjacent block using temporal prediction or spatial prediction along one of fixed predefined directions, calculating a prediction error block by subtracting the prediction block from the current block, transforming the prediction error block into a block of frequency coefficients, wherein the values of all AC coefficients are zero; and
h) whether the adjacent block has been coded by a directional spatial prediction, wherein the direction of the directional spatial prediction does not cross the current block.

12. The apparatus according to claim 11, wherein the judging unit is configured to decide negatively in the evaluation at least one of the conditions is fulfilled.

13. The apparatus according to any of claims 9 to 12 wherein
the prediction design unit is configured to select the type of spatial prediction as one of prediction by a uniform value for the entire current block, or prediction in the direction determined by the gradient calculation, the selection being performed for encoding the current block with the selected type of spatial prediction depending on a rate distortion optimization decision.

14. The apparatus according to any of claims 9 to 12 wherein
the prediction design unit is configured to select the direction of the spatial prediction for decoding the current block, the current block being decoded by using spatial prediction along the selected direction.

15. The apparatus according to any of claims 9 to 14 wherein

The gradient calculator is configured to calculate the vertical and/or horizontal gradient for a plurality of pixels in the adjacent block, the pixels being in proximity of the boundary of the adjacent block, the boundary being adjacent to the current block, the calculation being performed by convolution of the plurality of pixels with Sobel mask.

Fig. 1

# Fig. 2

EP 2 375 750 A1

# Fig. 3

# Fig. 9

EP 2 375 750 A1

# Fig. 4A

# Fig. 4B

EP 2 375 750 A1

# Fig. 4C

EP 2 375 750 A1

# Fig. 4D

# Fig. 5

# Fig. 6

Prediction mode = DC

620

flat block

DC AC01

AC10

630

AC01=AC10=0:
no edge OR
perfect prediction

640

610

660

▨ Gradients calculated
■ Gradients calculations skipped

Fig. 7

730

720

710

710

710

(a)

(b)

(c)

# Fig. 8

EP 2 375 750 A1

# Fig. 10

Streaming server ex103

Internet ex101

Internet service provider ex102

Telephone network ex104

LSI ex500

Computer ex111

Camera ex116

ex106

Game machine ex115

ex107

ex108

PDA ex112

ex109

Camera ex113

ex110

Cellular phone ex114

ex100

EP 2 375 750 A1

# Fig. 11

Fig. 12

ex104 Telephone network

ex300

Operation input unit — ex312
Bridge — ex313
Slot unit — ex314
Driver — ex315
Modem — ex316

ex220
ex218
ex216 SD
ex215
ex317
ex310

Control unit

ex309
ex307
Display unit — ex308

Audio signal processing unit — ex304
Video signal processing unit — ex305
ex306

Buffer — ex318
Buffer — ex319
Buffer — ex320
Buffer — ex321

ex303 Multiplexing/demultiplexing unit
ex302 Modulation/demodulation unit
ex301 Tuner

ex204
ex203

Power supply circuit unit — ex311
ex500

# Fig. 13

ex215

ex401

ex403

ex405
Disk
motor

Optical
head

Reproduction
demodulating
unit

ex500

ex404

Buffer

Servo control unit

Modulation
recording unit

ex406

ex402

System control unit

ex407

ex400

EP 2 375 750 A1

Fig. 14

Optical disk
ex215

Recording blocks
ex231

Information track
ex230

Inner
circumference area — ex232

Data recording
area — ex233

Outer
circumference area — ex234

# Fig. 15A

Audio output unit ex357

Camera unit ex365

Operation key unit ex366

Antenna ex350

Display unit ex358

Slot unit ex364

ex216

ex114

EP 2 375 750 A1

# Fig. 15B

ex370

ex358 — Display unit
ex359 — LCD control unit
ex350
ex361 — Power supply circuit unit → To each unit
ex351 — Transmitting and receiving unit
ex352 — Modulation/demodulation unit
ex360 — Main control unit
ex367 — Memory unit
ex364 — Slot unit
ex216 — Recording medium
ex353 — Multiplexing/demultiplexing unit
ex363 — Camera interface unit
ex365 — Camera unit
ex355 — Video signal processing unit
ex356 — Audio input unit
ex354 — Audio signal processing unit
ex362 — Operation input control unit
ex366 — Operation key unit
ex357 — Audio output unit

EP 2 375 750 A1

# Fig. 16

| |
|---|
| Video stream (PID=0x1011 Primary video) |
| Audio stream (PID=0x1100) |
| Audio stream (PID=0x1101) |
| Presentation graphics stream (PID=0x1200) |
| Presentation graphics stream (PID=0x1201) |
| Interactive graphics stream (PID=0x1400) |
| Video stream (PID=0x1B00 Secondary video) |
| Video stream (PID=0x1B01 Secondary video) |

EP 2 375 750 A1

# Fig. 17

Video frame stream

Audio frame stream

ex235

ex236

ex237

ex238

ex239

ex240

Multiplexed data
ex247

ex243

ex242

ex241

ex246

ex245

ex244

Presentation graphics stream

Interactive graphics stream

EP 2 375 750 A1

# Fig. 18

Video frame stream

| I picture | P picture | B picture | B picture | P picture | B picture | · · · |
|---|---|---|---|---|---|---|

yy1     yy2     yy3     yy4

Stream of
PES packets

| | I picture | | P picture | | B picture | | B picture | · · · |
|---|---|---|---|---|---|---|---|---|

PES
header     PES
payload

EP 2 375 750 A1

# Fig. 19

Stream of TS packets

TS header (4 Byte)  TS payload (184 Byte)

Stream of source packets

TP_extra_header (4 Byte)  TS packet (188 Byte)

Multiplexed data

SPN 0 1 2 3 4 5 6 7  ...

Source packet

EP 2 375 750 A1

# Fig. 20

Data structure of PMT

| PMT header |
| --- |
| Descriptor#1 |
| . . . |
| Descriptor#N |
| Stream Information#1 |
| . . . |
| Stream information#N |

| Stream type |
| --- |
| PID |
| Stream descriptor#1 |
| . . . |
| Stream descriptor#N |

EP 2 375 750 A1

# Fig. 21

Clip information file

XXX. CLPI

Clip information

Stream attribute information

Entry map

System rate

Reproduction start time

Reproduction end time

Multiplexed data (XXX. M2TS)

EP 2 375 750 A1

# Fig. 22

| PID | Stream attribute information |
|---|---|
| 0x1011 | Video stream attribute information |
| 0x1100 | Audio stream attribute information |
| 0x1101 | Audio stream attribute information |
| 0x1200 | Presentation graphics stream attribute information |
| 0x1201 | Presentation graphics stream attribute information |
| 0x1B00 | Video stream attribute information |

Stream attribute information

Codec
Resolution
Aspect ratio
Frame rate

Codec
Count of channels
Language
Sampling frequency

EP 2 375 750 A1

Fig. 23

# Fig. 24

EP 2 375 750 A1

# Fig. 25

ex801

Decoding processing
unit in present
invention

ex803

Driving frequency
switching unit

ex802

Decoding processing
unit in conformity with
conventional standard

ex800

# Fig. 26

Obtain identification information from coded stream — exS200

Video data generated by video coding method or video coding apparatus in present invention? — exS201

YES

NO

exS202

exS203

Set driving frequency higher

Set driving frequency lower

EP 2 375 750 A1

# Fig. 27

| Corresponding standard | Driving frequency |
|---|---|
| MPEG4. AVC | 500MHz |
| MPEG2 | 350MHz |
| ⋮ | ⋮ |

EP 2 375 750 A1

# Fig. 28A

ex901

Decoding processing
unit dedicated to
present invention

ex902

Decoding processing unit
shared between present
invention and conventional
standard

ex900

# Fig. 28B

Decoding processing unit
shared between present
invention and conventional
standard

ex1003

ex1001

Decoding processing
unit dedicated to
present invention

ex1002

Decoding processing unit
dedicated to conventional
standard

ex1000

Europäisches
Patentamt

European
Patent Office

Office européen
des brevets

**EUROPEAN SEARCH REPORT**

Application Number

EP 10 00 3870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 2 081 386 A1 (DRUGEON, VIRGINIE [DE] ET AL) 22 July 2009 (2009-07-22)<br>* abstract *<br>* paragraph [0015] *<br>* paragraphs [0061] - [0073] *<br>* figures 1,5,6 * | 1-15 | INV.<br>H04N7/34<br>H04N7/26 |
| Y | US 2009/279799 A1 (SUZUKI SHINGO [JP] ET AL) 12 November 2009 (2009-11-12)<br>* paragraph [0041] *<br>* figures 3,4 * | 1-15 | |
| Y | US 2009/262800 A1 (ZHANG XIMIN [US] ET AL) 22 October 2009 (2009-10-22)<br>* paragraph [0018] * | 1-15 | |
| Y | WEI Z ET AL: "An efficient intra-mode selection algorithm for H.264 based on edge classification and rate-distortion estimation"<br>SIGNAL PROCESSING. IMAGE COMMUNICATION, ELSEVIER SCIENCE PUBLISHERS, AMSTERDAM, NL LNKD- DOI:10.1016/J.IMAGE.2008.08.002, vol. 23, no. 9, 1 October 2008 (2008-10-01), pages 699-710, XP025561233 ISSN: 0923-5965 [retrieved on 2008-08-22]<br>* page 702 *<br>* figure 3 * | 3-7, 11-15 | TECHNICAL FIELDS SEARCHED (IPC)<br><br>H04N |

The present search report has been drawn up for all claims

| Place of search | Date of completion of the search | Examiner |
|---|---|---|
| Munich | 22 September 2010 | Regidor Arenales, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 00 3870

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2010

| Patent document cited in search report | | Publication date | Patent family member(s) | | Publication date |
|---|---|---|---|---|---|
| EP 2081386 | A1 | 22-07-2009 | AU | 2009205202 A1 | 23-07-2009 |
| | | | CA | 2680698 A1 | 23-07-2009 |
| | | | CN | 101682781 A | 24-03-2010 |
| | | | EP | 2230851 A1 | 22-09-2010 |
| | | | WO | 2009090884 A1 | 23-07-2009 |
| | | | US | 2010128995 A1 | 27-05-2010 |
| US 2009279799 | A1 | 12-11-2009 | JP | 2009273048 A | 19-11-2009 |
| US 2009262800 | A1 | 22-10-2009 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2081386 A1